# EUROPEAN PATENT SPECIFICATION

(11) **EP 3 672 005 B1**
(45) Date of publication and mention of the grant of the patent: **21.06.2023**
(21) Application number: 17921970.4
(22) Date of filing: 15.08.2017
(51) Int. Cl.: H02H 3/087, H01H 33/59, H02H 3/00, H02J 13/00, H02J 1/08

(54) **DIRECT CURRENT INTERRUPTION DEVICE**
GLEICHSTROMUNTERBRECHUNGSVORRICHTUNG
DISPOSITIF DE COUPURE DE COURANT CONTINU

(43) Date of publication of application: 24.06.2020
(73) Proprietor: Toshiba Energy Systems & Solutions Corporation, Saiwai-ku Kawasaki-shi Kanagawa 2120013 (JP)
(72) Inventor: KOYAMA Yushi, Tokyo 105-8001 (JP); MORIKAWA Ryuichi, Tokyo 105-8001 (JP); ISHIGURO Takahiro, Tokyo 105-8001 (JP)
(74) Representative: AWA Sweden AB
(86) International application number: PCT/JP2017/029380
(87) International publication number: WO 2019/035180

(56) References cited:
- WO-A1-2016/096016
- JP-A- 2014 236 306
- JP-A- 2016 167 406
- JP-A- 2017 004 869
- JP-B1- 6 042 041

## Description

### [Technical Field]

Embodiments of the present invention relate to a DC current breaking device.

### [Background Art]

A DC current breaking device is a device that breaks a current flowing through a DC power transmission line. As one form of a DC current breaking device, a DC current breaking device including a semiconductor switch is known. A DC power transmission circuit that sends DC power using a plurality of systems of DC power transmission lines may include a connection point to which the plurality of DC power transmission lines are connected. Since a DC current breaking device is provided near the connection point for each DC power transmission line, a configuration may become more complicated as the number of connected DC power transmission lines increases.

WO 2016/096016 A1 relates to a DC circuit breaker with a pulse current unit and a method for switching a direct current.

### [Citation List]

### [Patent Literature]

[Patent Literature 1]
PCT International Publication No. WO2011/57675

### [Summary of Invention]

### [Technical Problem]

An object of the present invention is to more simply configure a DC current breaking device for breaking a fault current flowing through any DC power transmission line at a connection point of a plurality of DC power transmission lines.

### [Solution to Problem]

The invention provides a DC current breaking device provided in a DC power transmission circuit, according to claim 1 and an alternative DC current breaking device provided in a DC power transmission circuit, according to claim 19. Preferred embodiments are defined in the dependent claims.

### [Brief Description of Drawings]

FIG. 1 is a configuration diagram of a DC current breaking device according to a first embodiment.
FIG. 2A is a diagram illustrating a configuration example of a semiconductor circuit breaker in the first embodiment.
FIG. 2B is a diagram illustrating a configuration example of the semiconductor circuit breaker in the first embodiment.
FIG. 3A is a diagram illustrating an example of a commutation device in the first embodiment.
FIG. 3B is a diagram illustrating an example of the commutation device in the first embodiment.
FIG. 3C is a diagram illustrating an example of the commutation device in the first embodiment.
FIG. 4 is a configuration diagram of a DC current breaking device according to a second embodiment.
FIG. 5 is a configuration diagram of a DC current breaking device according to a third embodiment.
FIG. 6 is a configuration diagram illustrating a converter according to the third embodiment.
FIG. 7 is a configuration diagram of a DC current breaking device according to a fourth embodiment.
FIG. 8A is a diagram illustrating a configuration example of a commutation device in the fourth embodiment.
FIG. 8B is a diagram illustrating a configuration example of the commutation device in the fourth embodiment.
FIG. 9 is a configuration diagram of a DC current breaking device according to a fifth embodiment.
FIG. 10 is a configuration diagram of a DC current breaking device according to a sixth embodiment.
FIG. 11 is a configuration diagram of a DC current breaking device according to a seventh embodiment.
FIG. 12 is a configuration diagram of a resonance circuit of the seventh embodiment.

### [Description of Embodiments]

Hereinafter, DC current breaking devices of embodiments will be described with reference to the drawings. In the following description, configurations having the same or corresponding functions are denoted by the same reference numerals. Repeated description of these configurations will be omitted.

### (First embodiment)

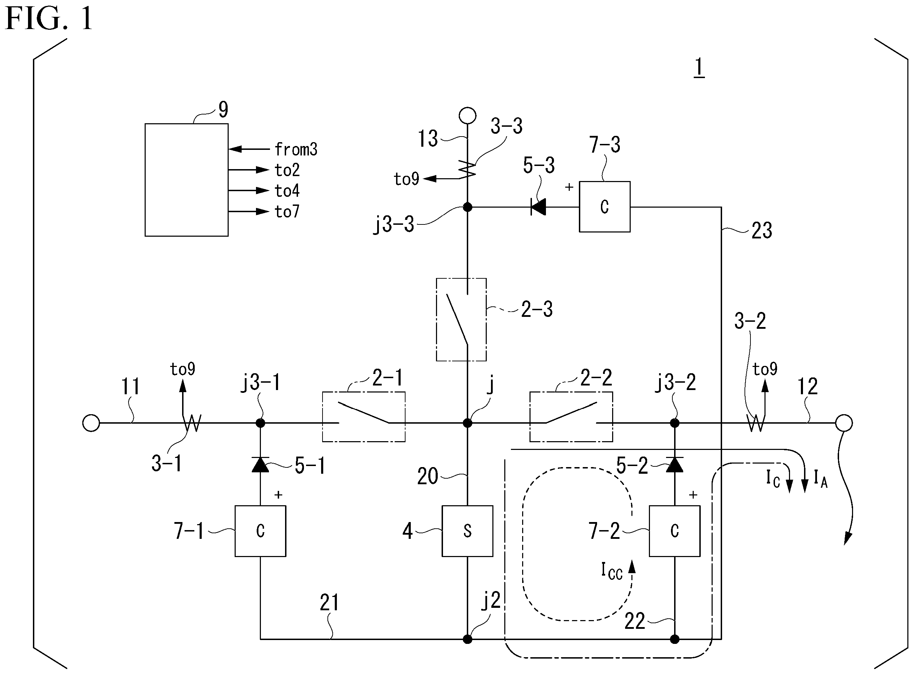

A DC current breaking device according to a first embodiment will be described with reference to FIG. 1. FIG. 1 is a configuration diagram of a DC current breaking device according to the first embodiment.

The DC current breaking device 1 illustrated in FIG. 1 includes mechanical disconnectors 2-1 to 2-3, current transformers 3-1 to 3-3, a semiconductor circuit breaker (S) 4, rectifying devices (rectifying devices) 5-1 to 5-3, commutation devices (C) 7-1 to 7-3, and a control unit 9. The mechanical disconnectors 2-1 to 2-3 are examples of mechanical contact type current disconnectors.

A DC power transmission circuit to which the DC current breaking device 1 is applied includes DC power transmission lines 11 to 13, and a connection point j (a first connection point) to which the DC power transmission lines 11 to 13 are electrically connected. The DC power transmission lines 11 to 13 are respectively associated with three systems and are electrically connected to each other at the connection point j. The DC power transmission line 11 is an example of a first DC power transmission line, the DC power transmission line 12 is an example of a second DC power transmission line, and the DC power transmission line 13 is an example of a third DC power transmission line. For example, ends of the DC power transmission lines 11 to 13 not illustrated in FIG. 1 are connected to different connection destinations (not illustrated).

The DC power transmission lines 11 to 13 are associated with, for example, a positive electrode of the DC power transmission circuit. In the following description, description of the negative electrode side of the DC power transmission circuit may be omitted as illustrated in FIG. 1.

The DC power transmission line 11 is provided with the mechanical disconnector 2-1, the DC power transmission line 12 is provided with the mechanical disconnector 2-2, and the DC power transmission line 13 is provided with the mechanical disconnector 2-3. The DC power transmission line 2-1 is an example of a first mechanical disconnector, the DC power transmission line 2-2 is an example of a second mechanical disconnector, and the DC power transmission line 2-3 is an example of a third mechanical disconnector. For example, a position at which the mechanical disconnector 2-1 is disposed is an end of the DC power transmission line 11. The same applies to the mechanical disconnectors 2-2 and 2-3. In the following description, the similarly configured mechanical disconnectors 2-1 to 2-3 may be collectively referred to as a mechanical disconnector 2. The same applies to other configurations.

The number of mechanical disconnectors 2 provided in the respective DC power transmission cables of the DC power transmission lines 11 to 13 is not limited to one for each DC power transmission line, and may be plural.

Although not illustrated, the DC power transmission lines 11 to 13 may be respectively provided with mechanical contact type current disconnectors that are the same as the mechanical disconnector 2 at the other ends thereof. Such a mechanical disconnector 2 may be used as a line switch.

A steady current flowing through the DC power transmission lines 11 to 13 and an abnormal current due to a ground fault, a short circuit, or the like are broken by the DC current breaking device 1 to be described below.

The DC power transmission line 11 is provided with the current transformer 3-1 that detects a current flowing through the DC power transmission line 11. The DC power transmission line 12 is provided with the current transformer 3-2 that detects a current flowing through the DC power transmission line 12. The DC power transmission line 13 is provided with the current transformer 3-3 that detects a current flowing through the DC power transmission line 13. For example, the current transformer 3-1 is disposed at a position relatively near a junction point j 3-1 and in a direction away from the connection point j. A position of the current transformer 3-1 illustrated in FIG. 1 is a position in a direction away from the connection point j with respect to the junction point j3-1, and is an example. The same applies to the current transformer 3-2 and the current transformer 3-3. The current transformers 3-1 to 3-3 output detection results regarding current values of the detected currents or detection results indicating overcurrent states of the detected currents.

The DC current breaking device 1 further includes a common auxiliary line 20, an auxiliary line 21 (a first auxiliary line), an auxiliary line 22 (a second auxiliary line), and an auxiliary line 23 (a third auxiliary line). The common auxiliary line 20 and the auxiliary lines 21 to 23 are not provided with at least a mechanical contact type current disconnector, such as the mechanical disconnector 2.

For example, a first end of the auxiliary line 21 is electrically connected to a junction point j3-1 (a first position) located on the side opposite to the connection point j with respect to the mechanical disconnector 2-1 in the DC power transmission line 11. A first end of the auxiliary line 22 is electrically connected to a junction point j3-2 (a second position) located on the side opposite to the connection point j with respect to the mechanical disconnector 2-2 in the DC power transmission line 12. A first end of the auxiliary line 23 is electrically connected to a junction point j3-3 (a third position) located on the side opposite to the connection point j with respect to the mechanical disconnector 2-3 in the DC power transmission line 13. A second end of the auxiliary line 21, a second end of the auxiliary line 22, and a second end of the auxiliary line 23 are electrically connected to a connection point j2 (a second connection point).

The common auxiliary line 20 electrically connects the connection point j to the connection point j2. The common auxiliary line 20 is provided with the semiconductor circuit breaker 4. The semiconductor circuit breaker 4 is an example of a first unit. Details of the semiconductor circuit breaker 4 will be described below.

Each of the auxiliary lines 21 to 23 is provided with at least a second unit. The commutation devices 7-1 to 7-3 may have the same configuration. The commutation device 7 is an example of the second unit. For example, the auxiliary line 21 is provided with the rectifying device 5-1 and the commutation device 7-1, the auxiliary line 22 is provided with the rectifying device 5-2 and the commutation device 7-2, and the auxiliary line 23 is provided with the rectifying device 5-3 and the commutation device 7-3.

The rectifying device 5-1 is provided in the auxiliary line 21 in a direction allowing a current due to the commutation relevant to the DC power transmission line 11 to flow through the auxiliary line 21. The rectifying device 5-2 is provided in the auxiliary line 22 in a direction allowing a current due to commutation relevant to the DC power transmission line 12 to flow through the auxiliary line 22. The rectifying device 5-3 is provided in the auxiliary line 23 in a direction allowing a current due to commutation relevant to the DC power transmission line 13 to flow through the auxiliary line 23.

For example, for a direction of the rectifying device 5-1 of the first embodiment, the direction allowing the current due to the commutation relevant to the DC power transmission line 11 to flow is a direction that matches a direction in which the current commutated by the commutation device 7 flows, and is directed from the connection point j2 to the junction point j3-1 in the auxiliary line 21. The rectifying device 5-1 causes a forward current to flow in that direction. The same applies to the rectifying device 5-2 and the rectifying device 5-3.

The commutation device 7-1 operates so that a current flowing through the DC power transmission line 11 flows through the semiconductor circuit breaker 4 when a predetermined condition has been satisfied. The commutation device 7-2 operates so that a current flowing through the DC power transmission line 12 flows through the semiconductor circuit breaker 4 when the predetermined condition is satisfied. The commutation device 7-3 operates so that a current flowing through the DC power transmission line 13 flows through the semiconductor circuit breaker 4 when the predetermined condition is satisfied. For example, the predetermined condition is what a current value of a current detected by any of the current transformers 3-1 to 3-3 exceeds a predetermined threshold value. In this case, the commutation device in which the predetermined condition has been satisfied among the commutation devices 7-1 to 7-3 commutates a current as described above. Details of the commutation device 7 will be described below.

When the commutation device 7 is configured so that a flow does not occur in a direction opposite to a direction in which the current due to the commutation flows, the rectifying device 5 may not be provided.

The control unit 9 controls each unit of the DC current breaking device 1 on the basis of detection results of the respective current transformers 3-1 to 3-3. For example, the control unit 9 controls respective states of the mechanical disconnectors 2-1 to 2-3, the first unit, and the second unit such that the states are brought into an OFF state in which a current is blocked and an ON state in which the current flows. The first unit in the first embodiment is the semiconductor circuit breaker 4. The second unit in the first embodiment is the commutation device 7.

Next, more specific configurations of the respective units of the DC current breaking device 1 in the first embodiment will be described in order.

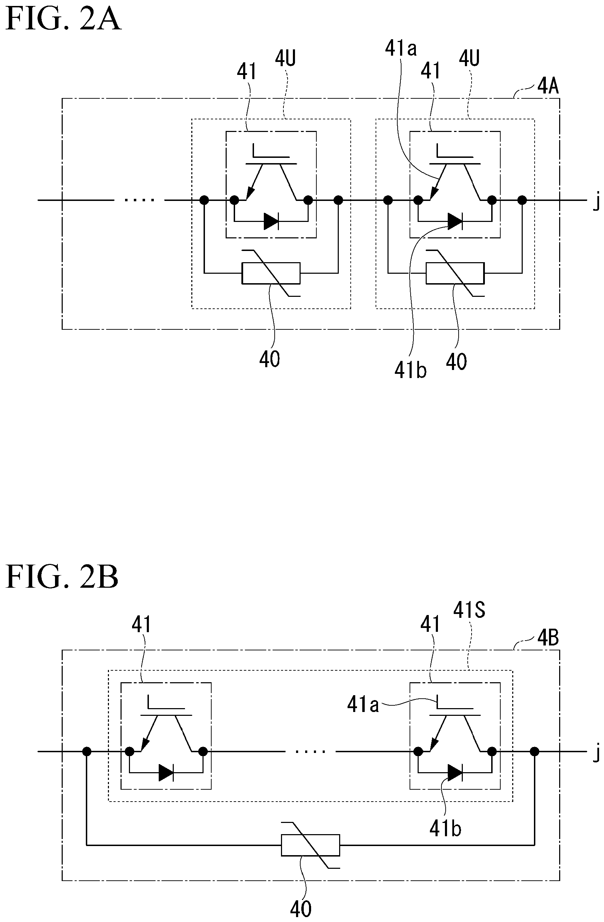

First, the semiconductor circuit breaker according to the first embodiment will be described with reference to FIGS. 2A and 2B. FIGS.2A and 2B are diagrams illustrating a configuration example of the semiconductor circuit breaker in the first embodiment.

A semiconductor circuit breaker 4A illustrated in FIG. 2A is an example of the semiconductor circuit breaker 4. The semiconductor circuit breaker 4A includes parallel circuit units 4U having the number of stages allowing a necessary withstand voltage to be exceeded. For example, a plurality of parallel circuit units 4U are connected in series. The parallel circuit unit 4U includes a semiconductor switching device 41 and an arrester 40. The semiconductor switching device 41 and the arrester 40 are connected in parallel to each other.

A semiconductor circuit breaker 4B illustrated in FIG. 2B is an example of the semiconductor circuit breaker 4. The semiconductor circuit breaker 4B includes a semiconductor switching device array 41S in which semiconductor switching devices 41 having the number of stages allowing a necessary withstand voltage to be exceeded are connected in series, and an arrester 40. The arrester 40 is connected in parallel to the entire semiconductor switching device array 41S.

The semiconductor circuit breakers 4A and 4B include at least a set of a plurality of semiconductor switching devices 41, and the arrester 40 connected in parallel to any one of the plurality of semiconductor switching devices 41 in the set.

The semiconductor circuit breakers 4A and 4B include the plurality of semiconductor switching devices 41 connected in series. For example, each of the semiconductor switching devices 41 of the semiconductor circuit breakers 4A and 4B includes an insulated gate bipolar transistor (IGBT) 41a and a rectifier 41b connected in parallel. In each semiconductor switching device 41, an emitter of the IGBT 41a is connected to an anode of the rectifier 41b, and a collector of the IGBT 41a is connected to a cathode of the rectifier 41b. The IGBT 41a may be an injection enhanced gate transistor (IEGT). The semiconductor circuit breakers 4A and 4B may include at least one semiconductor switching device 41. The rectifier 41b is an example of a rectifying device.

In the semiconductor circuit breakers 4A and 4B, the plurality of semiconductor switching devices 41 connected in series are arranged with directions of polarities thereof uniformly aligned.

For example, the emitter of the IGBT 41a of the k-th semiconductor switching device 41 and the collector of the IGBT 41a of the (k+1)-th semiconductor switching device 41, which have been connected in series, are connected to each other, and this connection is repeated in order. For example, the collector of the first semiconductor switching device 41 (the IGBT 41a) located at an end among the semiconductor switching devices 41 connected in series is connected to the connection point j in FIG. 1. Similarly, the anode of the rectifier 41b of the k-th semiconductor switching device 41 and the cathode of the rectifier 41b of the (k+1)-th semiconductor switching device 41, which have been connected in series, are connected to each other, and this connection is repeated in order. For example, the cathode of the first rectifier 41b located at an end among the rectifiers 41b connected in series is connected to the connection point j in FIG. 1.

In the semiconductor circuit breakers 4A and 4B, when the IGBT 41a is caused to enter an OFF state so that the rectifier 41b enters a reverse bias state, the semiconductor circuit breakers 4A and 4B are in the broken state, and when the IGBT 41a is caused to turn to an ON state, the semiconductor circuit breaker 4A and 4B enter a conduction state.

The semiconductor circuit breaker 4 includes at least one semiconductor switching device 41 and the arrester 40 connected in parallel to the at least one semiconductor switching device 41. The semiconductor circuit breaker 4 may be any one of the semiconductor circuit breakers 4A and 4B, or may be a semiconductor circuit breaker in another form.

A plurality of semiconductor switching device arrays 41S illustrated in FIG. 2B may be connected in parallel to each other. That is, in the semiconductor circuit breaker 4, the plurality of semiconductor switching devices 41 may be connected in parallel. In this case, directions of the polarities of the plurality of semiconductor switching devices 41 are uniformly aligned. The semiconductor circuit breakers 4 according to an arrangement scheme described above may be a semiconductor circuit breaker in which directions of polarities of the semiconductor switching devices 41 connected in series or in parallel are aligned in the same direction and are directed in one specific direction only.

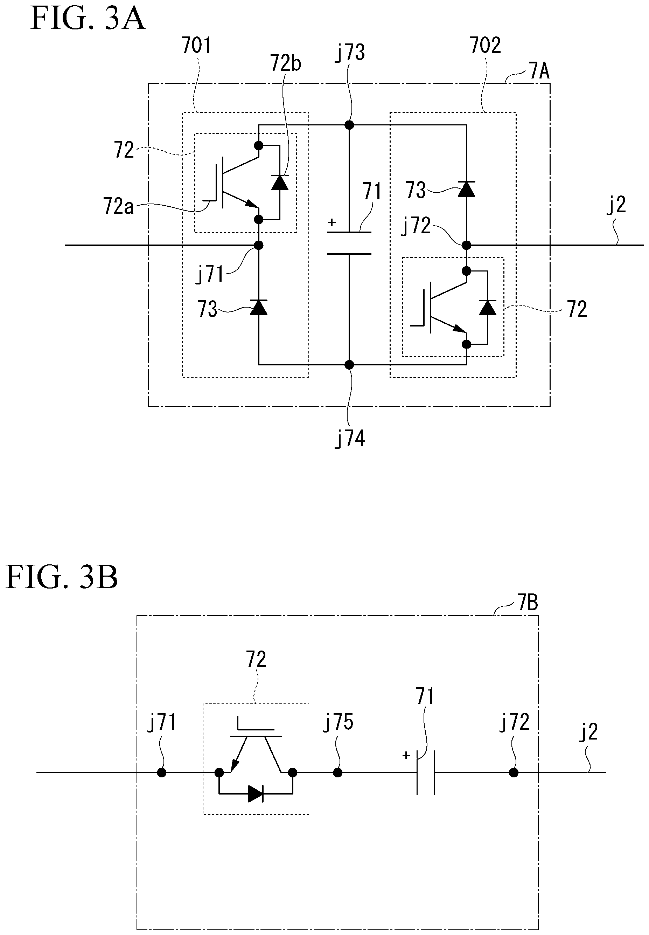

Next, the commutation device in the first embodiment will be described with reference to FIGS. 3A to 3C. FIGS. 3A to 3C are diagrams illustrating a configuration example of the commutation device in the first embodiment. An example of a commutation device 7 illustrated in FIGS. 3A to 3C includes one semiconductor switching device 72 or a plurality of semiconductor switching devices connected in series or in parallel. The semiconductor switching device 72 is included in the plurality of semiconductor switching devices. A semiconductor switching device such as the semiconductor switching device 72 is, for example, an IGBT or an IEGT. Next, a more specific example is shown.

A commutation device 7A illustrated in FIG. 3A is an example of the commutation device 7. The commutation device 7A includes a capacitor 71, a leg 701, and a leg 702. Each of the leg 701 and the leg 702 includes one or more semiconductor switching devices 72 and one or more rectifiers 73. In the leg 701 and the leg 702 illustrated in FIG. 3A, one semiconductor switching device 72 and one rectifier 73 are connected in series. In this case, the commutation device 7A includes at least one capacitor 71, two semiconductor switching devices 72, and two rectifiers 73. The rectifier 73 is an example of a rectifying device.

In the commutation device 7A, a half bridge unit in which the leg 701, the leg 702, and the at least one capacitor 71 are disposed between a connection point j73 and a connection point j74 and connected in parallel to each other is formed. Each of connection points j71 and j72 between the semiconductor switching device 72 and the rectifier 73 in the leg 701 and the leg 702 is connected to the outside of the half bridge unit. When each of the connection points j71 and j72 is connected to the outside of the commutation device 7, the connection point j71 is electrically connected to the connection point j3 (FIG. 1). The connection point j72 is electrically connected to the connection point j2 (FIG. 1). Such a commutation device 7A is said to be a bridge type.

The semiconductor switching device 72 includes, for example, one IGBT 72a and one rectifier 72b connected in parallel. In each semiconductor switching device 72, an emitter of the IGBT 72a is connected to an anode of the rectifier 72b, and a collector of the IGBT 72a is connected to a cathode of the rectifier 72b. The IGBT 72a may be an IEGT.

In the case of the commutation device 7A, the capacitor 71 is charged by a charging means (not illustrated) so that a potential at the connection point j73 is higher than a potential at the connection point j74. When the two semiconductor switching devices 72 are both in the OFF state, a charged state of the capacitor 71 is maintained. When the two semiconductor switching devices 72 enter the ON state, the capacitor 71 is connected to the outside of the half-bridge unit and can be discharged.

Further, a commutation device 7B illustrated in FIG. 3B is an example of the commutation device 7. The commutation device 7B includes a capacitor 71 and a semiconductor switching device 72. In the commutation device 7B, the capacitor 71 and a collector of the semiconductor switching device 72 are connected in series at a connection point j75. Each of a connection point j71 of the semiconductor switching devices 72 and a connection point j72 of the capacitor 71 connected in series is connected to the outside of the commutation device 7. For example, the connection point j71 of the semiconductor switching device 72 is connected to the connection point j3 (FIG. 1), and the connection point j72 of the capacitor 71 is connected to the connection point j2 (FIG. 1).

In the case of the commutation device 7B, the capacitor 71 is charged by a charging means (not illustrated) so that a potential on the connection point j 75 side becomes higher than the potential on the connection point j72 side.

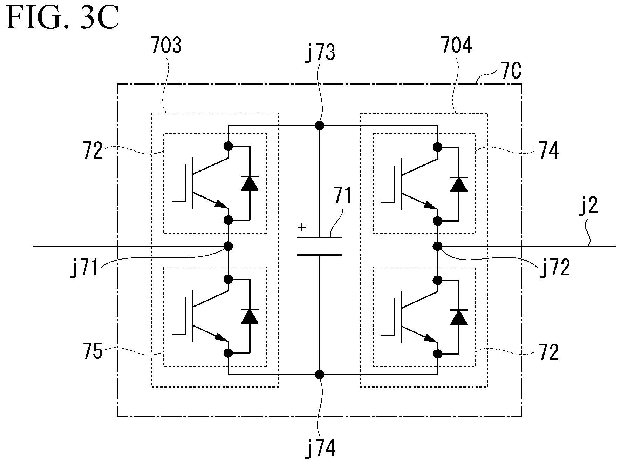

Further, a commutation device 7C illustrated in FIG. 3C is an example of the commutation device 7. The commutation device 7C includes a leg 703, a leg 704, and at least one capacitor 71. The leg 703 and the leg 704 are examples of a leg in which two or more switching elements are connected in series. One or more legs 703 or one or more legs 704 may be included, and when there are two or more legs 703 or two or more legs 704, the legs 703 or the legs 704 may be connected in parallel.

The commutation device 7C includes a full bridge unit in which the leg 703, the leg 704, and the at least one capacitor 71 are disposed between a connection point j73 and a connection point j 74 and connected in parallel to each other. For example, the leg 703 includes one or more semiconductor switching devices 72 and one or more semiconductor switching devices 75. In the leg 703 illustrated in FIG. 3C, one semiconductor switching device 72 and one semiconductor switching device 75 are connected in series. The semiconductor switching device 72 and the semiconductor switching device 75 in the leg 703 are defined as the connection point j 72. The same applies to the leg 704. The semiconductor switching device 72 and the semiconductor switching device 74 in the leg 704 are defined as the connection point j71. For example, each of the connection points j71 and j72 is connected to the outside of the full bridge unit. When each of the connection points j71 and j72 is connected to the outside of the commutation device 7, the connection pointj72 of the leg 704 is electrically connected to the connection point j2 (FIG. 1), and the connection point j71 of the leg 703 is electrically connected to the connection point j3 (FIG. 1). Such a commutation device 7C is said to be a full bridge type.

The semiconductor switching devices 72, 74, and 75 are of the same type. For example, the semiconductor switching device 72 includes an IGBT 72a and a rectifier 72b connected in parallel. In each semiconductor switching device 72, an emitter of the IGBT 72a is connected to an anode of the rectifier 72b, and a collector of the IGBT 72a is connected to a cathode of the rectifier 72b. The IGBT 72a may be an IEGT.

Although the commutation device 7C is formed as a full bridge type, the commutation device 7C may be caused to function as a half bridge type by using some of the semiconductor switching devices. For example, the commutation device 7C may set the semiconductor switching devices 72 as a target of control for switching a conduction state of the IGBT 72a and keep respective IGBTs of the semiconductor switching devices 74 and 75 in an OFF state so that a rectifier may be used. Alternatively, the commutation device 7C may include one of the leg 703 and the leg 704 and the capacitor 71.

In the case of the commutation device 7C, the capacitor 71 may be charged using the same method as in the commutation device 74A.

Thus, in all of the commutation devices 7A, 7B, and 7C, the capacitor 71 is charged to a desired DC voltage with a desired polarity in an operation of the DC power transmission circuit. For example, before commutation is started, the commutation device 7 causes a potential at the connection point j71 to be higher than a potential at the connection point j72 so that the commutation can be started. The configuration diagram of FIG. 1 or the like described above shows that the commutation device 7 has been charged so that the terminal of the commutation device 7 has a higher potential than the other terminal, by attaching a mark "+" near the terminal of the commutation device 7. The same applies to the following description.

The commutation device 7 illustrated in each of FIGS. 3A to 3C has a configuration for one stage, but a configuration in which the commutation devices 7 are connected in series in a plurality of stages may be adopted.

An operation of the DC current breaking device 1 of the first embodiment will be described herein.

In a steady operation until a system fault occurs in any of the DC power transmission lines 11 to 13, the control unit 9 performs control so that the mechanical disconnectors 2-1 to 2-3 enter an ON state and the semiconductor circuit breaker 4 (the first unit) and all the commutation devices 7 (the second units) enter an OFF state. Current flowing through the DC power transmission lines 11 to 13 flows through the respective mechanical disconnectors 2-1 to 2-3.

When the system fault has occurred in any of the DC power transmission lines 11 to 13, the control unit 9 breaks a current flowing through at least one DC power transmission line in which the system fault has occurred, according to the following procedure. Description will be given herein assuming that the system fault has occurred in the DC power transmission line 12 as illustrated in FIG. 1. A fault current I_{A} flows due to the above system fault.

First, the control unit 9 detects that the system fault has occurred, on the basis of a detection result of the fault current I_{A} detected by the current transformer 3-2.

When the control unit 9 detects the system fault, the control unit 9 causes the semiconductor circuit breaker 4 to turn to the ON state, and causes the commutation device 7-2 corresponding to the DC power transmission line 12 in which the system fault has occurred, to turn to an operable state (an ON state). Thereby, a closed circuit CC1 including the commutation device 7-2, the rectifying device 5-2, the mechanical disconnector 2-2, and the semiconductor circuit breaker 4 through the connection points j and j2 is formed. When a current Icc flows through the closed circuit CC1 passing through the connection points j, j2, and j3-2, the fault current I_{A} flowing through the mechanical disconnector 2-2 is canceled out and a substantially zero current state is caused.

As described above, the mechanical disconnector 2-2 belonging to the DC power transmission line 12 in which the system fault has occurred is present in the closed circuit CC1 including the commutation device 7-2. The fault current I_{A} flowing through the mechanical disconnector 2-2 is commutated to the commutation device 7-2, and the current Ic flows. Thus, when the mechanical disconnector 2-2 enters a zero current state, the mechanical disconnector 2-2 can be caused to turn to the OFF state.

Next, the control unit 9 causes the mechanical disconnector 2-2 in the zero current state to turn to the OFF state, and then causes the semiconductor circuit breaker 4 to enter the OFF state. By causing the semiconductor circuit breaker 4 to enter the OFF state, energy generated at both ends of the semiconductor circuit breaker 4 is consumed by the arrester 40.

The control unit 9 stops the operation of the commutation device 7-2 after the control unit 9 causes the mechanical disconnector 2-2 to turn to the OFF state.

According to the above procedure, the DC current breaking device 1 can break the current flowing through the DC power transmission line 12 in which the system fault has occurred.

The above operation is the same for the other DC power transmission lines. As described above, the number of the semiconductor circuit breakers 4 is one, and the semiconductor circuit breaker 4 is shared by the respective DC power transmission cables. Thus, even when the system fault has occurred in the DC power transmission cable of any one of the DC power transmission lines 11 to 13, the DC power transmission cable in which the system fault has occurred can be disconnected by one semiconductor circuit breaker 4.

Superiority of the DC current breaking device 1 according to the first embodiment will be described with reference to a comparative example of the first embodiment.

In order to break only one DC power transmission line in which a fault has occurred among a plurality of DC power transmission lines of a power transmission network (a DC power transmission circuit), it is necessary for a DC current breaking device CE of a comparative example to be provided at both ends of the DC power transmission line of the power transmission network (the DC power transmission circuit), with the DC power transmission line interposed therebetween, when the DC current breaking device CE of the comparative example is used.

In such a DC current breaking device CE of the comparative example, the number of DC current breaking devices CE increases when the number of DC power transmission lines is large. The DC current breaking device CE of the comparative example cannot be simply configured when the number of DC power transmission lines is large.

On the other hand, in the DC current breaking device 1 of the first embodiment, one semiconductor circuit breaker 4 is shared among the DC power transmission lines 11 to 13. Thereby, it is not necessary to increase the number of the semiconductor circuit breakers 4 with an increase in the number of systems of DC power transmission lines. The DC current breaking device 1 of the first embodiment can be configured more simply as compared with the above comparative example, and the superiority of the DC current breaking device 1 is enhanced as the number of systems of applied DC power transmission lines increases.

According to the first embodiment, it is possible to reduce the number of semiconductor circuit breakers 4 as compared with the comparative example in which the DC current breaking device CE is individually connected to each of the DC power transmission lines 11 to 13, and thus, it is possible to reduce the number of components of the semiconductor switching device and achieve a low cost and small size for the DC current breaking device 1. For example, when the DC current breaking device has been applied to a connection point of n DC power transmission lines, the number of semiconductor circuit breakers 4 that can be reduced through sharing of the semiconductor circuit breakers 4 is (n-1). The semiconductor circuit breaker 4 in which it is necessary for an insulation withstand voltage to be ensured includes a large number of components of built-in semiconductor switching devices and is generally expensive. Thus, an effect of cost and reduction in the DC current breaking device 1 in which the number of semiconductor circuit breakers 4 can be reduced is relatively large.

Further, although the DC current breaking device 1 of the first embodiment has the above advantages over the comparative example, it is still possible to break a fault current of a system fault at high speed.

Matters common to the following embodiments will be described.

A configuration of the first embodiment is an example, and the number of systems of DC power transmission lines connected to the connection point is not limited to the above example, and the DC current breaking device 1 can be applied to a connection point to which any number of systems of DC power transmission lines are connected, or to a case in which the connection points are mechanically separated and disposed. For example, the DC current breaking device 1 can be applied to a connection point of two or four or more DC power transmission lines or two separately disposed connection points.

A plurality of commutation devices 7 may be formed in series. Further, some or all of at least one or more commutation devices 7 may be configured as a full bridge type.

Further, when energy when the semiconductor circuit breaker 4 has entered the OFF state is low enough to make the arrester 40 unnecessary, the arrester 40 may not be included. The semiconductor circuit breaker 4 may be configured so that a polarity of the semiconductor switching device is bidirectional or unidirectional.

Further, the number of mechanical disconnectors 2-1 provided in the DC power transmission line 11 in FIG. 1 is one, but may be plural, or mechanical contact type current disconnectors provided in the DC power transmission line 11 may be connected in series and parallel.

According to the first embodiment, the DC current breaking device 1 is provided in the DC power transmission circuit in which at least the DC power transmission line 11 and the DC power transmission line 12 are electrically connected to each other at the connection point j. The DC current breaking device 1 includes the mechanical disconnector 2-1, the mechanical disconnector 2-2, the auxiliary line 21, the auxiliary line 22, the common auxiliary line 20, the first unit, and the second unit. The mechanical disconnector 2-1 is provided in the DC power transmission line 11. The mechanical disconnector 2-1 is provided in the DC power transmission line 12. The auxiliary line 21 is electrically connected to the junction point j3-1 located on the side opposite to the connection point j with respect to the mechanical disconnector 2-1 in the DC power transmission line 11. The auxiliary line 22 is electrically connected to the junction point j3-2 located on the side opposite to the connection point j with respect to the mechanical disconnector 2-2 in the DC power transmission line 12. The common auxiliary line 20 is electrically connected between the connection point j2 to which the auxiliary line 21 and the auxiliary line 22 are electrically connected, and the connection point j. The first unit is provided in the common auxiliary line 20. The second unit is provided in each of a first line that is the DC power transmission line 11 or the auxiliary line 21, and a second line that is the DC power transmission line 12 or the auxiliary line 22. One of the first unit and the second unit is the semiconductor circuit breaker 4 that includes at least one semiconductor switching device and is capable of breaking a current. The other of the first unit and the second unit is the commutation device 7 that commutates the current flowing through the DC power transmission line 11 or the DC power transmission line 12 so that the current flows through the semiconductor circuit breaker 4 when a predetermined condition has been satisfied. Thereby, it is possible to more simply configure the DC current breaking device 1 for breaking a fault current flowing through any of the DC power transmission cables at the connection point of the plurality of DC power transmission cables.

Further, the DC power transmission circuit includes the DC power transmission line 13 electrically connected to the connection point j. The DC current breaking device 1 further includes the mechanical disconnector 2-3 provided in the DC power transmission line 13, and the auxiliary line 23 electrically connected to the junction point j3-3 located on the side opposite to the connection point j with respect to the mechanical disconnector 2-3 in the DC power transmission line 13. The second unit is also provided on a third line which is the DC power transmission line 13 or the auxiliary line 23. Thereby, the DC current breaking device 1 can be configured more simply even in a DC power transmission circuit including at least a DC power transmission line.

Further, since the first unit is the semiconductor circuit breaker 4 and the second unit is the commutation device 7, the semiconductor circuit breaker 4 is enabled to break the current of each DC power transmission line. Thereby, it is possible to reduce the number of semiconductor circuit breakers 4 as compared with a case in which the semiconductor circuit breakers 4 are provided independently.

Further, the commutation device 7 can commutate a current to each DC power transmission line by being provided in each of the auxiliary line 21 and the auxiliary line 22.

Further, the rectifying device 5-1 is provided in the auxiliary line 21, and is provided in a direction allowing the current commutated by the commutation device 7 from the DC power transmission line 11 to flow. The rectifying device 5-2 is provided in the auxiliary line 21 and is provided in a direction allowing a current due to the commutation relevant to the DC power transmission line 11 to flow. Accordingly, a current in a direction different from that of the commutation can be limited without the commutation being limited.

Further, the commutation device 7 includes one semiconductor switching device or a plurality of semiconductor switching devices connected in series or in parallel. Therefore, it is possible to control the start of the commutation through an operation of the semiconductor switching device.

Further, the commutation device 7 can be configured as a full bridge type including one full bridge unit or two or more full bridge units connected in series, and in the full bridge unit, two of the legs (703, 704) in which a plurality of semiconductor switching devices are connected in series and the legs (701, 702) in which one or more semiconductor switching devices and one or more rectifying devices are connected in series, and at least one capacitor are connected in parallel.

Further, the commutation device 7 can be configured as a bridge type including one half bridge unit or two or more half bridge units connected in series, and in the half bridge unit, one of a leg in which a plurality of semiconductor switching devices are connected in series and a leg in which at least one semiconductor switching device and at least one rectifying device are connected in series, and at least one capacitor are connected in parallel.

Further, the control unit 9 controls respective states of the mechanical disconnector 2, the first unit, and the second unit such that the states are brought into an OFF state in which the current is blocked and an ON state in which the current flows. In a steady operation until a system fault occurs in the DC power transmission line 11 or the DC power transmission line 12, the control unit 9 performs control so that the mechanical disconnector 2-1 or 2-2 enters the ON state and the unit and the second unit enter the OFF state. When the system fault has occurred, the control unit 9 causes the first unit, and the second unit corresponding to the DC power transmission line in which the system fault has occurred among the DC power transmission line 11 and the DC power transmission line 12 to turn to the ON state, so that a substantially zero current state is created for a current flowing through the mechanical disconnector 2 belonging to the DC power transmission line in which the system fault has occurred, which is any one mechanical disconnector 2 among the mechanical disconnectors 2-1 to 2-3, causes the mechanical disconnector 2 in the substantially zero current state to turn to the OFF state, and then causes the first unit, and the second unit corresponding to the DC power transmission line in which the system fault has occurred to enter the OFF state. Thereby, it is possible to implement breaking of the current flowing through the DC power transmission line in which the system fault has occurred, with a simpler configuration.

Further, the DC power transmission circuit of the first embodiment can be configured without a semiconductor device such as the semiconductor circuit breaker 4 or the commutation device 7 being provided in the DC power transmission lines 11 to 13. With such a configuration, a conduction loss due to the semiconductor device does not occur in a steady operation. Further, such an effect becomes more significant when a relatively high current flows in a steady operation in the DC power transmission circuit.

The mechanical disconnectors 2-1 to 2-3 of the first embodiment may not include the arresters connected in parallel.

### (Second embodiment)

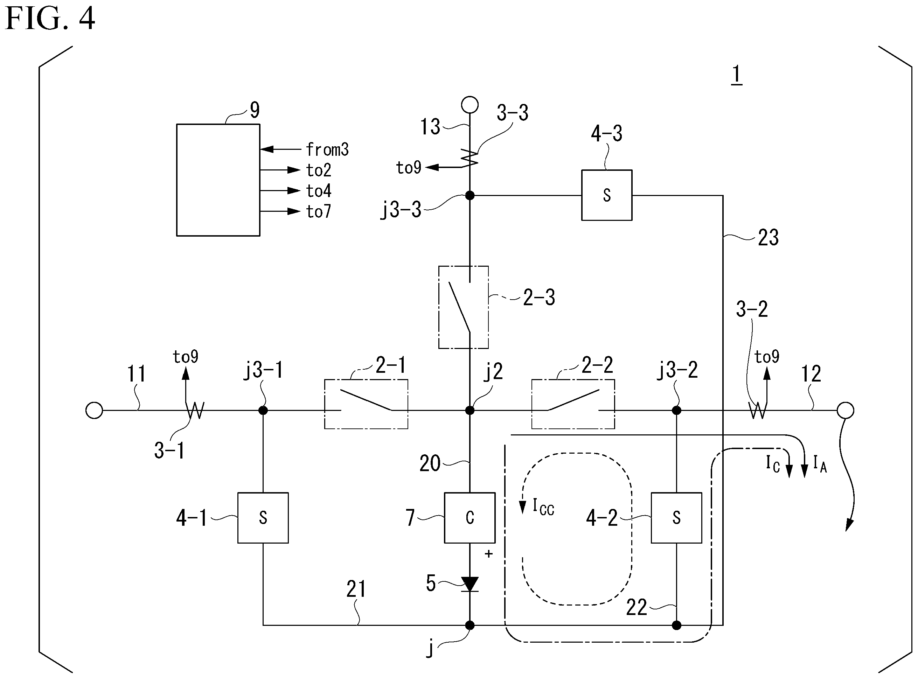

A DC current breaking device according to a second embodiment will be described with reference to FIG. 4. FIG. 4 is a configuration diagram of the DC current breaking device according to the second embodiment. Differences from FIG. 1 will be mainly described.

A DC current breaking device 1 illustrated in FIG. 4 includes mechanical disconnectors 2-1 to 2-3, current transformers 3-1 to 3-3, semiconductor circuit breakers 4-1 to 4-3, a rectifying device 5, a commutation device 7, and a control unit 9.

A DC power transmission circuit to which the DC current breaking device 1 is applied includes DC power transmission lines 11 to 13, and a connection point j2 (a first connection point) to which the DC power transmission lines 11 to 13 are electrically connected.

The DC current breaking device 1 further includes a common auxiliary line 20, an auxiliary line 21 (a first auxiliary line), an auxiliary line 22 (a second auxiliary line), and an auxiliary line 23 (a third auxiliary line).

For example, a first end of the auxiliary line 21 is electrically connected to a junction point j3-1 (a first position) located on the side opposite to the connection point j2 with respect to the mechanical disconnector 2-1 in the DC power transmission line 11. The same applies to the auxiliary line 22 and the auxiliary line 23. A second end of the auxiliary line 21, a second end of the auxiliary line 22, and a second end of the auxiliary line 23 are electrically connected to a connection point j (a second connection point).

The common auxiliary line 20 is electrically connected between the connection point j and the connection point j2. The common auxiliary line 20 is provided with a rectifying device 5 and the commutation device 7. The commutation device 7 is an example of a first unit.

The auxiliary line 21 is provided with the semiconductor circuit breaker 4-1, the auxiliary line 22 is provided with the semiconductor circuit breaker 4-2, and the auxiliary line 23 is provided with the semiconductor circuit breaker 4-3. The semiconductor circuit breakers 4-1 to 4-3 are examples of a second unit. That is, the second unit is provided in at least each of the auxiliary line 21 and the auxiliary line 22. Further, the second unit is also provided on the auxiliary line 23. Thus, the second unit may be provided on each of the auxiliary lines.

The rectifying device 5 is provided in the common auxiliary line 20 together with the commutation device 7 so that the rectifying device 5 is electrically in series with the commutation device 7. The rectifying device 5 is provided in a direction allowing a current due to commutation relevant to any of the DC power transmission lines 11 to 13 to flow through the common auxiliary line 20.

The commutation device 7 operates so that a current flowing through the DC power transmission line 11 flows through any one of the semiconductor circuit breakers 4-1 to 4-3 when a predetermined condition has been satisfied.

The direction allowing the current due to the commutation relevant to the DC power transmission line 11 to flow is a direction from the connection point j2 to the connection point j in the common auxiliary line 20. The rectifying device 5 causes a forward current to flow in that direction.

Here, an operation of the DC current breaking device 1 of the second embodiment will be described.

Description will be given assuming that a system fault has occurred in the DC power transmission line 12 as illustrated in FIG. 4. A fault current I_{A} flows due to the above system fault.

When the control unit 9 detects the system fault, the control unit 9 causes the semiconductor circuit breaker 4-2 to turn to the ON state, and causes the commutation device 7 corresponding to the DC power transmission line 12 in which the system fault has occurred, to turn to an operable state (an ON state). Thereby, a closed circuit including the commutation device 7, the rectifying device 5, the semiconductor circuit breaker 4-2, and the mechanical disconnector 2-2 through the connection points j and j2 is formed. When a current Icc flows through the closed circuit passing through the connection points j, j2, and j3-2, the fault current I_{A} flowing through the mechanical disconnector 2-2 is canceled out and a substantially zero current state is caused. The substantially zero current state includes a state in which a combined current of the current Icc and the fault current I_{A} becomes zero (a zero current state). The fault current I_{A} flowing through the mechanical disconnector 2-2 is commutated to the commutation device 7-2, and a current Ic flows.

Next, the control unit 9 causes the mechanical disconnector 2-2 in the zero current state to turn to the OFF state, and then causes the semiconductor circuit breaker 4-2 to enter the OFF state. By causing the semiconductor circuit breaker 4-2 to enter the OFF state, energy generated at both ends of the semiconductor circuit breaker 4-2 is consumed by the arrester 40.

The control unit 9 stops the operation of the commutation device 7 after the control unit 9 causes the mechanical disconnector 2-2 in the zero current state to turn to the OFF state.

According to the above procedure, the DC current breaking device 1 can break the current flowing through the DC power transmission line 12 in which the system fault has occurred.

The above operation is the same for the other DC power transmission cables. The number of commutation devices 7 is one, and the commutation device 7 is shared by the respective DC power transmission cables. Thus, even when the system fault occurs in the DC power transmission cable of any one of the DC power transmission lines 11 to 13, the one commutation device 7 can operate to disconnect the DC power transmission cable in which the system fault has occurred.

According to the second embodiment, the first unit is the commutation device 7, the second unit is the semiconductor circuit breaker 4, and the semiconductor circuit breaker 4 is provided in each of the auxiliary line 21 and the auxiliary line 22, thereby enabling the commutation device 7 to be shared in order to break the current of each DC power transmission line, in addition to achievement of the same effects as in the first embodiment. Thereby, it is possible to reduce the number of commutation devices 7 as compared with a case in which the commutation devices 7 are provided independently in the respective DC power transmission lines.

Further, since the rectifying device 5 is provided electrically in series with the commutation device 7 (the first unit) in a direction allowing the current due to the commutation to flow, it is possible to limit a current in a direction different from that of the commutation without limiting the commutation.

### (Third embodiment)

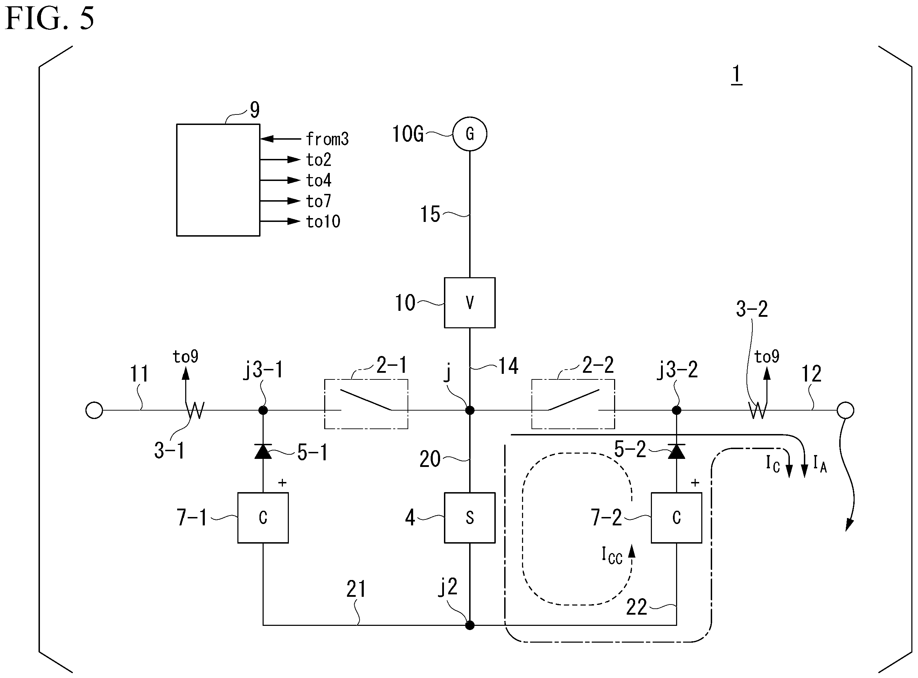

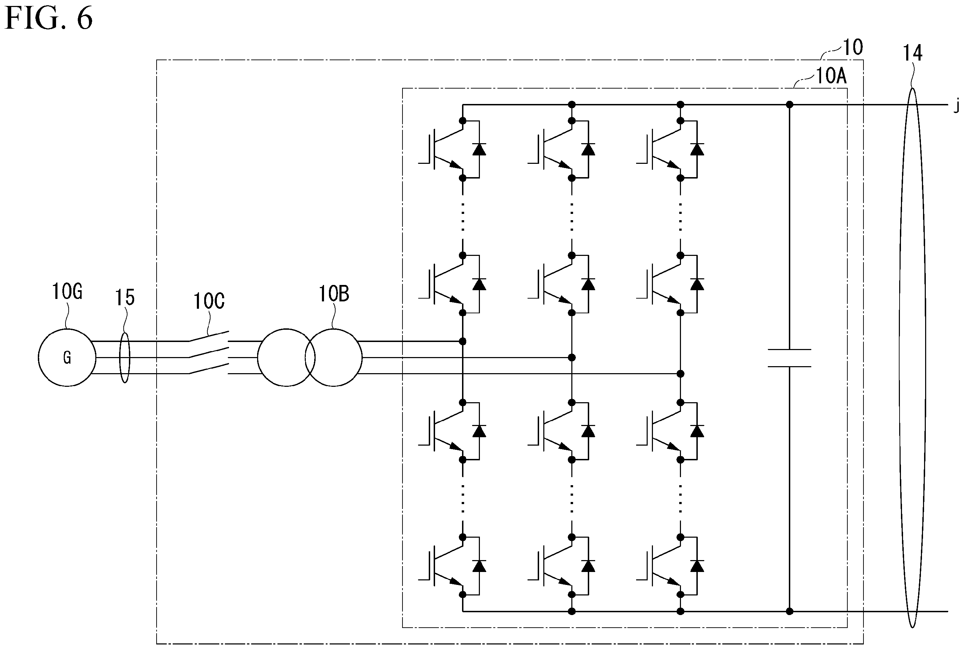

A DC current breaking device according to a third embodiment will be described with reference to FIGS. 5 and 6. FIG. 5 is a configuration diagram of the DC current breaking device according to the third embodiment. Differences from FIG. 1 will be mainly described.

The DC current breaking device 1 illustrated in FIG. 5 includes mechanical disconnectors 2-1 and 2-2, current transformers 3-1 and 3-2, a semiconductor circuit breaker 4, rectifying devices 5-1 and 5-2, commutation devices 7-1 and 7-2, a control unit 9, and a converter 10. The converter 10 may be a device external to the DC current breaking device 1.

ADC power transmission circuit to which the DC current breaking device 1 is applied includes DC power transmission lines 11, 12, and 14, and a connection point j (a first connection point) to which the DC power transmission lines 11, 12, and 14 are electrically connected.

The DC current breaking device 1 further includes a common auxiliary line 20, an auxiliary line 21 (a first auxiliary line), and an auxiliary line 22 (a second auxiliary line).

In the DC power transmission circuit of the third embodiment, a DC power transmission line 14 is connected to a connection point j instead of the DC power transmission line 13 of the first embodiment. The DC power transmission line 14 has a first end connected to the connection point j (a first connection point), and a second end connected to a DC side terminal of the converter 10.

A three-phase AC power transmission line 15 is connected to an AC side terminal of the converter 10, and a power generator (G) 10G is connected to the AC side terminal of the converter 10 via the three-phase AC power transmission line 15. For example, the power generator 10G is a three-phase AC generator.

FIG. 6 illustrates a configuration of the converter 10. FIG. 6 is a configuration diagram illustrating the converter according to the third embodiment. The converter 10 includes an AC-to-DC converter 10A, a transformer 10B, and an AC circuit breaker 10C. The AC-to-DC converter 10A performs bidirectional conversion between an AC power and a DC power. Such a converter 10 performs mutual conversion of power between a three-phase AC power transmission line 15 side terminal and a DC power transmission line 14 side terminal.

The control unit 9 controls each unit of the DC current breaking device 1 on the basis of detection results of the current transformers 3-1 and 3-2. The control unit 9 may further control the converter 10 on the basis of the detection results of the current transformers 3-1 and 3-2. In the constituent units illustrated in FIG. 5, description of a connection between the control unit 9 and the converter 10 will be omitted.

The DC power transmission circuit of the third embodiment corresponds to that of the first embodiment described above. The DC current breaking device 1 operates as in the first embodiment.

According to the third embodiment, it is possible to apply DC current breaking device to the DC power transmission circuit 14 in which the power generator 10G or the like is connected to the connection point j via the converter 10, in addition to achievement of the same effects as those of the first embodiment. Thereby, it is possible to reduce the number of semiconductor circuit breakers 4 as compared to the case in which the DC current breaking device is individually connected to each of the DC power transmission lines 11 and 12, while enhancing a degree of freedom of a configuration of the applicable DC power transmission circuit.

### (Fourth embodiment)

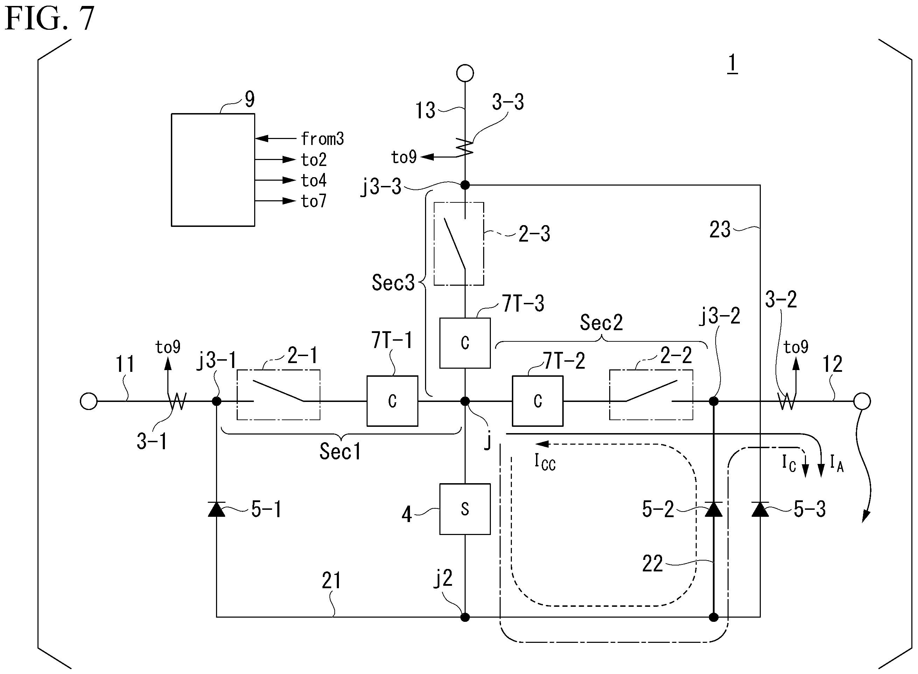

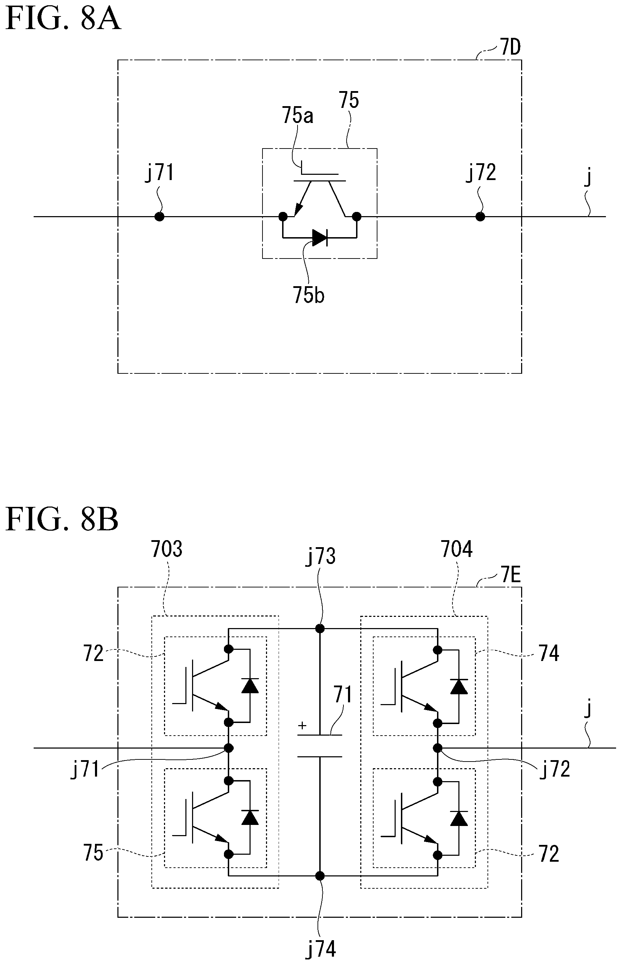

A DC current breaking device according to a fourth embodiment will be described with reference to FIGS. 7 and 8. FIG. 7 is a configuration diagram of the DC current breaking device according to the fourth embodiment. Differences from FIG. 1 will be mainly described.

The DC current breaking device 1 illustrated in FIG. 7 includes mechanical disconnectors 2-1 to 2-3, current transformers 3-1 to 3-3, a semiconductor circuit breaker 4, rectifying devices 5-1 to 5- 3, commutation devices 7T-1 to 7T-3, and a control unit 9.

ADC power transmission circuit to which the DC current breaking device 1 illustrated in FIG. 7 is applied includes DC power transmission lines 11 to 13, and a connection point j (a first connection point) to which the DC power transmission lines 11 to 13 are electrically connected to each other.

The DC current breaking device 1 further includes a common auxiliary line 20, an auxiliary line 21 (a first auxiliary line), an auxiliary line 22 (a second auxiliary line), and an auxiliary line 23 (a third auxiliary line).

The DC current breaking device 1 includes a first unit provided in the common auxiliary line 20. The DC current breaking device 1 includes a second unit provided in each of the DC power transmission line 11 (a first line), the DC power transmission line 12 (a second line), and the DC power transmission line 13 (a third line). The semiconductor circuit breaker 4 is an example of the first unit, and the commutation devices 7T-1 to 7T-3 are examples of the second unit.

For example, the DC power transmission line 11 is provided with the mechanical disconnector 2-1 and the commutation device 7T-1, the DC power transmission line 12 is provided with the mechanical disconnector 2-2 and the commutation device 7T-2, and the DC power transmission line 13 is provided with the mechanical disconnector 2-3 and the commutation device 7T-3, as illustrated in FIG. 7. For example, the mechanical disconnector 2-1 is disposed at an end of the DC power transmission line 11, the mechanical disconnector 2-2 is disposed at an end of the DC power transmission line 12, and the mechanical disconnector 2-3 is disposed at an end of the DC power transmission line 13. The number of mechanical disconnectors 2-1 to 2-3 respectively provided in the respective DC power transmission cables of the DC power transmission lines 11 to 13 is not limited to one, and may be plural.

Next, the commutation device in the fourth embodiment will be described with reference to FIGS. 8A and 8B. FIGS. 8A and 8B are diagrams illustrating a configuration example of the commutation device in the fourth embodiment. An example of a commutation device 7T illustrated in FIGS. 8A and 8B includes one semiconductor switching device 72 or a plurality of semiconductor switching devices connected in series or in parallel. The semiconductor switching device 72 is included in the plurality of semiconductor switching devices. A semiconductor switching device such as the semiconductor switching device 72 is, for example, an IGBT or an IEGT. Next, a more specific example is shown.

A commutation device 7D illustrated in FIG. 8A is an example of the commutation device 7T. The commutation device 7D includes one semiconductor switching device 75. The semiconductor switching device 75 includes an IGBT 75a and a rectifier 75b connected in parallel. In each semiconductor switching device 75, an emitter of the IGBT 75a is connected to an anode of the rectifier 75b, and a collector of the IGBT 75a is connected to a cathode of the rectifier 75b. The IGBT 75a may be an IEGT. Each of connection points j71 and j72 of the commutation device 7 is connected to the outside of the commutation device 7T. For example, the connection point j71 is electrically connected to the mechanical disconnector 2-1 (FIG. 7) or the like. The connection point j 72 is electrically connected to the connection point j (FIG. 7).

A commutation device 7E illustrated in FIG. 8B is an example of the commutation device 7T. The commutation device 7E includes a leg 703, a leg 704, and at least one capacitor 71. The commutation device 7E has the same configuration as the commutation device 7C described above. However, the commutation device 7E is different from that of the commutation device 7C in a connection destination.

A semiconductor switching device 72 and a semiconductor switching device 75 in the leg 703 are defined as the connection point j71. The same applies to the leg 704. A semiconductor switching device 72 and a semiconductor switching device 74 in the leg 704 are defined as the connection point j72. For example, each of the connection points j71 and j72 is connected to the outside of a full bridge unit. When each of the connection points j71 and j72 is connected to the outside of the commutation device 7E, the connection pointj72 of the leg 704 is electrically connected to the connection point j (FIG. 7), and the connection point j 72 of the leg 703 is electrically connected to the mechanical disconnector 2 (FIG. 7) or the like. Such a commutation device 7E is said to be a full bridge type.

Here, an operation of the DC current breaking device 1 of the fourth embodiment will be described.

In a steady operation until a system fault occurs in any of the DC power transmission lines 11 to 13, the control unit 9 performs control so that the mechanical disconnectors 2-1 to 2-3 and all the commutation devices 7T (a second unit) enter an ON state and the semiconductor circuit breaker 4 (a first unit) enters an OFF state. A current flowing through the DC power transmission line 11 flows through the mechanical disconnector 2-1 and the commutation device 7T-1. A current flowing through the DC power transmission line 12 flows through the mechanical disconnector 2-2 and the commutation device 7T-2. A current flowing through the DC power transmission line 13 flows through the mechanical disconnector 2-3 and the commutation device 7T-3.

When the system fault has occurred in any of the DC power transmission lines 11 to 13, the control unit 9 breaks a current flowing through at least one DC power transmission line in which the system fault has occurred, according to the following procedure. Description will be given herein assuming that the system fault has occurred in the DC power transmission line 12 as illustrated in FIG. 1. A fault current I_{A} flows due to the above system fault.

First, the control unit 9 detects that the system fault has occurred, on the basis of a detection result of the fault current I_{A} detected by the current transformer 3-2.

When the control unit 9 detects the system fault, the control unit 9 causes the semiconductor circuit breaker 4 to turn to the ON state, and operates the commutation device 7T-2 corresponding to the DC power transmission line 12 in which the system fault has occurred, so that the commutation device 7T-2 enters an OFF state or a current flowing therethrough is zero.

For example, as a first method, when the commutation device 7T-2 is caused to enter the OFF state, commutation to a path passing through the connection points j and j2 occurs, the current Ic flows, and a substantially zero current state of the fault current I_{A} flowing through the mechanical disconnector 2-2 is created.

Alternatively, as a second method, when the commutation device 7T-2 is operated so that the current flowing through the commutation device 7T-2 becomes zero, the commutation device 7T-2 causes, for example, the current Icc to flow through a closed circuit including the commutation device 7-2, the semiconductor circuit breaker 4, the rectifying device 5-2, and the mechanical disconnector 2-2 through the connection points j and j2. When the current Icc flows through the closed circuit passing through the connection points j and j2, the fault current I_{A} flowing through the mechanical disconnector 2-2 is canceled out and a substantially zero current state is caused.

Using any of the above methods, the fault current I_{A} flowing through the mechanical disconnector 2-2 is commutated to the semiconductor circuit breaker 4, and the current Ic flows. Thus, when the current flowing through the mechanical disconnector 2-2 and the commutation device 7-2 enters a zero current state, the mechanical disconnector 2-2 can be caused to turn to the OFF state.

Next, the control unit 9 causes the mechanical disconnector 2-2 in the zero current state to turn to the OFF state, and then causes the semiconductor circuit breaker 4 to enter the OFF state. By causing the semiconductor circuit breaker 4 to enter the OFF state, energy generated at both ends of the semiconductor circuit breaker 4 is consumed by the arrester 40.

The control unit 9 may cause the commutation device 7-2 to turn to an OFF state or a state in which an operation has been stopped, after the fault current I_{A} is commutated to the semiconductor circuit breaker 4.

According to the above procedure, the DC current breaking device 1 can break the current flowing through the DC power transmission line 12 in which the system fault has occurred.

According to the fourth embodiment, since the commutation device 7T is provided in each of a first section between the junction point j3-1 in the DC power transmission line 11 and the connection point j, and a second section between the junction point j3-2 in the DC power transmission line 12 and the connection point j, the DC current breaking device 1 can break the current flowing through the DC power transmission line 11 or the DC power transmission line 12 in the DC power transmission circuit in which the commutation device 7T-1 is provided in the DC power transmission line 11 and he commutation device 7T-2 is provided in the DC power transmission line 12, in addition to achievement of the same effects as in the first embodiment. Further, since the commutation device 7T is also provided in a third section between the junction point j3-3 in the DC power transmission line 11 and the connection point j, the DC current breaking device 1 can break the current flowing through the DC power transmission line 13 in the DC power transmission circuit in which the commutation device 7T-3 is provided in the DC power transmission line 13. A section Sec1 illustrated in FIG. 7 is an example of the first section, a section Sec2 is an example of the second section, and a section Sec3 is an example of the third section.

Further, the rectifying device 5-1 is provided in the auxiliary line 21, and is provided in a direction allowing the current commutated by the commutation device 7 from the DC power transmission line 11 to flow. The rectifying device 5-2 is provided in the auxiliary line 22 and is provided in a direction allowing the current commutated by the commutation device 7 from the DC power transmission line 11 to flow. Accordingly, a current in a direction different from that of the commutation can be limited without the commutation being limited.

The commutation device 7T has a function of commutating the current flowing through each DC power transmission cable to the semiconductor circuit breaker 4, and is configured so that at least a rated current flows continuously. A configuration of such a commutation device 7T is not limited to the configuration illustrated in FIG. 8A. For example, the semiconductor switching device 75 of the commutation device 7D illustrated in FIG. 8A can control a unidirectional current conduction state, but can control a bidirectional current conduction state.

Further, the semiconductor circuit breaker 4 may be capable of controlling a unidirectional current conduction state or may be capable of controlling a bidirectional current conduction state in the semiconductor switching device 41. Such a semiconductor circuit breaker 4 may have either a bidirectional conduction state or an only unidirectional current conduction state.

Further, the control unit 9 controls respective states of the mechanical disconnector 2, the semiconductor circuit breaker 4, and the commutation device 7T such that the states are brought into an OFF state in which the current is blocked and an ON state in which the current flows. In a steady operation until a system fault occurs in the DC power transmission line 11 or the DC power transmission line 12, the control unit 9 operates the mechanical disconnector 2 and the commutation device 7T such that the mechanical disconnector 2 and the commutation device 7T are brought into an ON state and the semiconductor circuit breaker 4 such that the semiconductor circuit breaker 4 is brought into an OFF state. When the system fault has occurred, the control unit 9 causes the semiconductor circuit breaker 4 to turn to an ON state, thereby commutating the current to the semiconductor circuit breaker 4. Further, the control unit 9 causes the mechanical disconnector 2-1 or 2-2 in a substantially zero current state to turn to an OFF state and causes the semiconductor circuit breaker 4 to enter an OFF state. Thereby, it is possible to start the commutation by causing the commutation device 7T-1 or 7T-2 disposed so that the current of the DC power transmission line 11 or the DC power transmission line 12 flows in the steady operation to enter the OFF state.

### (Fifth embodiment)

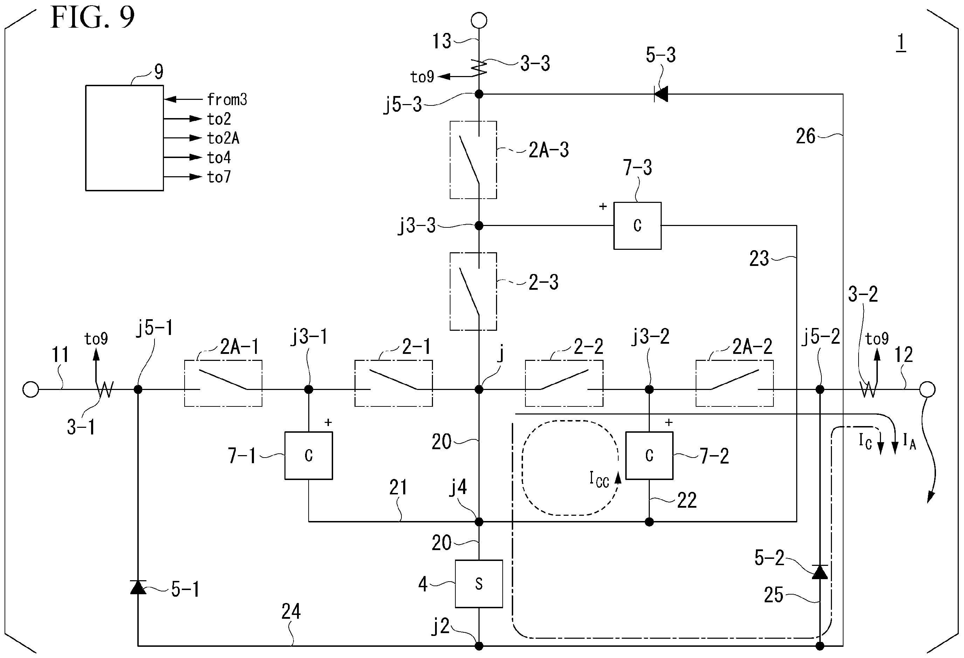

A DC current breaking device according to a fifth embodiment will be described with reference to FIG. 9. FIG. 9 is a configuration diagram of the DC current breaking device according to the fifth embodiment. Differences from FIG. 1 will be mainly described.

A DC current breaking device 1 illustrated in FIG. 9 includes mechanical disconnectors 2-1 to 2-3, mechanical disconnectors 2A-1 to 2A-3, current transformers 3-1 to 3-3, a semiconductor circuit breaker 4, rectifying devices 5-1 to 5-3, commutation devices 7-1 to 7-3, and a control unit 9. The mechanical disconnector 2A-1 is an example of a fourth mechanical disconnector, the mechanical disconnector 2A-2 is an example of a fifth mechanical disconnector, and the mechanical disconnector 2A-3 is an example of a sixth mechanical disconnector.

A DC power transmission circuit to which the DC current breaking device 1 is applied includes DC power transmission lines 11 to 13, and a connection point j (a first connection point) to which the DC power transmission lines 11 to 13 are electrically connected.

The DC current breaking device 1 further includes a common auxiliary line 20, an auxiliary line 21 (a first auxiliary line), an auxiliary line 22 (a second auxiliary line), an auxiliary line 23 (a third auxiliary line), an auxiliary line 24 (a fourth auxiliary line), an auxiliary line 25 (a fifth auxiliary line), and an auxiliary line 26 (a sixth auxiliary line).

The mechanical disconnector 2A-1 is provided on the side opposite to the connection point j with respect to the mechanical disconnector 2-1 in the DC power transmission line 11. The mechanical disconnector 2A-2 is provided on the side opposite to the connection point j with respect to the mechanical disconnector 2-2 in the DC power transmission line 12. The mechanical disconnector 2A-3 is provided on the side opposite to the connection point j with respect to the mechanical disconnector 2-3 in the DC power transmission line 13.

For example, in the DC power transmission line 11, the mechanical disconnector 2 is a circuit breaker having a function of breaking a current, and the mechanical disconnector 2A is a disconnector having a high withstand voltage.

A first end of the auxiliary line 24 is electrically connected to a junction point j5-1 (a fourth position) located on the side opposite to the connection point j with respect to the mechanical disconnector 2A-1 in the DC power transmission line 11, and a connection point j2. A first end of the auxiliary line 25 is electrically connected to a junction point j5-2 (a fifth position) located on the side opposite to the connection point j with respect to the mechanical disconnector 2A-2 in the DC power transmission line 12, and the connection point j2. A first end of the auxiliary line 26 is electrically connected to a junction point j5-3 (a sixth position) located on the side opposite to the connection point j with respect to the mechanical disconnector 2A-3 in the DC power transmission line 13, and the connection point j2. A second end of the auxiliary line 24, a second end of the auxiliary line 25, and a second end of the auxiliary line 26 are electrically connected to the connection point j2 (the second connection point). That is, the auxiliary line 21 is provided between a junction point j3-1 located between the mechanical disconnector 2-1 and the mechanical disconnector 2A-1 in the DC power transmission line 11, and the connection point j2 and is electrically connected to the junction point j3-1 and the connection point j2. The same applies to the auxiliary line 22 and the auxiliary line 23.

The rectifying device 5-1 is provided in the auxiliary line 24 in a direction allowing the current commutated by the commutation device 7 from the DC power transmission line 11 to flow through the auxiliary line 24. The rectifying device 5-2 is provided in the auxiliary line 25 in a direction allowing the current commutated by the commutation device 7 from the DC power transmission line 12 to flow through the auxiliary line 25. The rectifying device 5-3 is provided in the auxiliary line 26 in a direction allowing a current due to commutation relevant to the DC power transmission line 13 to flow through the auxiliary line 26. For example, the rectifying device 5-1 is provided so that a forward current flows in a direction from the connection point j2 to the junction point j5. The same applies to the rectifying devices 5-2 and 5-3.

The common auxiliary line 20 electrically connects the connection point j to the connection point j2. The common auxiliary line 20 is provided with the semiconductor circuit breaker 4. A position at which the semiconductor circuit breaker 4 is provided in the common auxiliary line 20 is between a junction point j4 and the connection point j2. The junction point j4 is disposed at a position at which the auxiliary lines 21 to 23 and the common auxiliary line 20 are electrically connected to each other.

An operation of the DC current breaking device 1 of the fifth embodiment will be described.

In a steady operation until a system fault occurs in any of the DC power transmission lines 11 to 13, the control unit 9 performs control so that the mechanical disconnectors 2-1 to 2-3, the mechanical disconnectors 2A-1 to 2A-3 enter an ON state, and the semiconductor circuit breaker 4 (a first unit) and all the commutation devices 7 (second units) enter an OFF state. Currents flowing through the DC power transmission lines 11 to 13 are transmitted through the mechanical disconnector 2 and the mechanical disconnector 2A.

When the system fault has occurred in any of the DC power transmission lines 11 to 13, the control unit 9 breaks a current flowing through at least one DC power transmission line in which the system fault has occurred, according to the following procedure. Description will be given herein assuming that the system fault has occurred in the DC power transmission line 12 as illustrated in FIG. 9. A fault current I_{A} flows through the mechanical disconnector 2-2 and the mechanical disconnector 2A-2 due to the above system fault.

First, the control unit 9 detects that the system fault has occurred, on the basis of a detection result of the fault current I_{A} detected by the current transformer 3-2.

When the control unit 9 detects the system fault, the control unit 9 causes the semiconductor circuit breaker 4 to turn to the ON state, and causes the commutation device 7-2 corresponding to the DC power transmission line 12 in which the system fault has occurred, to turn to an operable state (an ON state). Thereby, a closed circuit including the commutation device 7-2 and the mechanical disconnector 2-2 through the connection point j is formed. When a current Icc flows through the closed circuit passing through the connection point j, the fault current I_{A} flowing through the mechanical disconnector 2-2 is canceled out and a substantially zero current state is caused.

As described above, the mechanical disconnector 2-2 belonging to the DC power transmission line 12 in which the system fault has occurred is present in the closed circuit including the commutation device 7-2. The fault current I_{A} flowing through the mechanical disconnector 2-2 is commutated to the semiconductor circuit breaker 4, and the current Ic passing through the rectifying device 5-2 flows. Thus, when the mechanical disconnector 2-2 enters a zero current state, the mechanical disconnector 2-2 can be caused to turn to the OFF state.

Next, the control unit 9 causes the mechanical disconnector 2-2 in the zero current state to turn to the OFF state. Further, the control unit 9 causes the mechanical disconnector 2A-2 in the zero current state to turn to the OFF state, and then causes the semiconductor circuit breaker 4 to enter the OFF state. By causing the semiconductor circuit breaker 4 to enter the OFF state, energy generated at both ends of the semiconductor circuit breaker 4 is consumed by the arrester 40.

The control unit 9 may cause the commutation device 7-2 to turn to an OFF state after the fault current I_{A} is commutated to the semiconductor circuit breaker 4.

According to the above procedure, the DC current breaking device 1 can break the current flowing through the DC power transmission line 12 in which a system fault has occurred.

The above operation is the same for the other DC power transmission cables. The number of the semiconductor circuit breakers 4 is one, and the semiconductor circuit breaker 4 is shared by the respective DC power transmission cables. Thus, even when the system fault has occurred in the DC power transmission cable of any one of the DC power transmission lines 11 to 13, the DC power transmission cable in which the system fault has occurred can be disconnected by one semiconductor circuit breaker 4.

According to the fifth embodiment, the mechanical disconnector 2A-1 is provided on the side opposite to the connection point j with respect to the mechanical disconnector 2-1 in the DC power transmission line 11, in addition to the achievement of the same effects as in the first embodiment. The mechanical disconnector 2A-2 is provided on the side opposite to the connection point j with respect to the mechanical disconnector 2-2 in the DC power transmission line 12. The auxiliary line 24 is electrically connected to the junction point j5-1 located on the side opposite to the connection point j 1 with respect to the mechanical disconnector 2A-1 in the DC power transmission line 11, and the connection point j2. The auxiliary line 25 is electrically connected to the junction point j 5-2 located on the side opposite to the connection point j with respect to the mechanical disconnector 2A-2 in the DC power transmission line 12, and the connection point j2. Thereby, in the DC power transmission circuit including the mechanical disconnectors 2A-1 and 2A-2 and the mechanical disconnectors 2-1 to 2-2, the fault current I_{A} generated in the DC power transmission line 11 or the DC power transmission line 12 can be commutated to a path including the auxiliary line 24 or the auxiliary line 25.

Further, since the first unit in the fifth embodiment is the semiconductor circuit breaker 4, and the second unit is the commutation device 7, the semiconductor circuit breaker 4 can break a current due to the commutation relevant to the DC power transmission line 11 or the DC power transmission line 12.

### (Sixth embodiment)

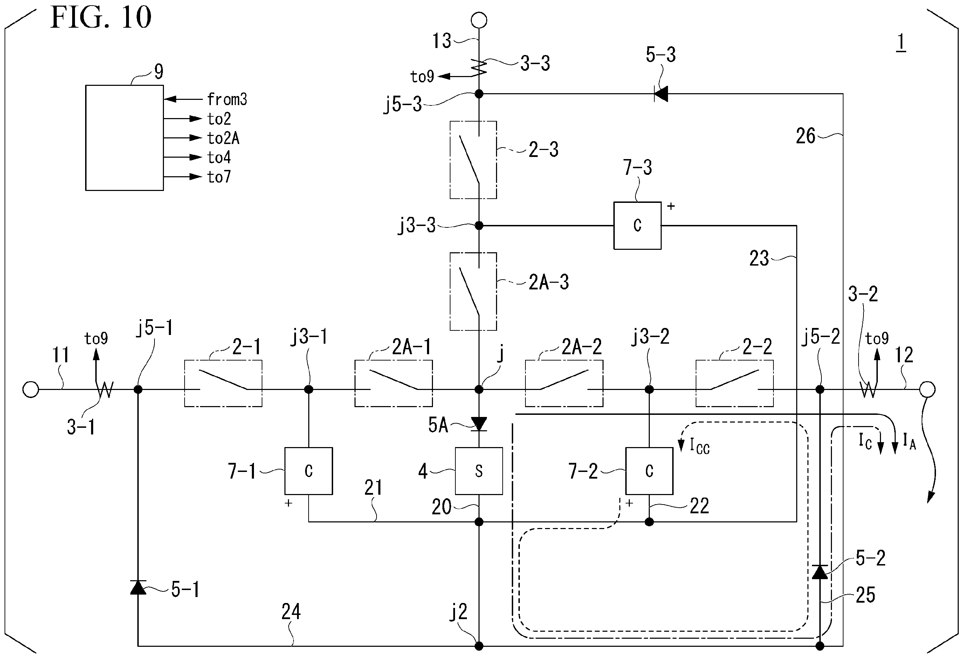

A DC current breaking device according to a sixth embodiment will be described with reference to FIG. 10. FIG. 10 is a configuration diagram of the DC current breaking device according to the sixth embodiment. Differences from FIGS. 1 and 9 will be mainly described.

A DC current breaking device 1 illustrated in FIG. 10 includes mechanical disconnectors 2-1 to 2-3, mechanical disconnectors 2A-1 to 2A-3, current transformers 3-1 to 3-3, a semiconductor circuit breaker 4, rectifying devices 5-1 to 5-3, a rectifying device 5A, commutation devices 7-1 to 7-3, and a control unit 9.

A first end of the auxiliary line 21 is electrically connected to a junction point j3-1 (a first position) located on the side opposite to the connection point j with respect to the mechanical disconnector 2A-1 in the DC power transmission line 11. A first end of the auxiliary line 22 is electrically connected to a junction point j3-2 (a second position) located on the side opposite to the connection point j with respect to the mechanical disconnector 2A-2 in the DC power transmission line 12. A first end of the auxiliary line 23 is electrically connected to a junction point j3-3 (a third position) located on the side opposite to the connection point j with respect to the mechanical disconnector 2A-3 in the DC power transmission line 13. At least a second end of the auxiliary line 21, a second end of the auxiliary line 22, and a second end of the auxiliary line 23 are electrically connected to a connection point j2 (a second connection point).

Further, the auxiliary line 24 is electrically connected to a junction point j5-1 (a fourth position) located on the side opposite to the connection point j with respect to the mechanical disconnector 2-1 in the DC power transmission line 11, and a connection point j2. The auxiliary line 25 is electrically connected to a junction point j5-2 (a fifth position) located on the side opposite to the connection point j with respect to the mechanical disconnector 2-2 in the DC power transmission line 12, and the connection point j2. The auxiliary line 26 is electrically connected to a junction point j5-3 (a sixth position) located on the side opposite to the connection point j with respect to the mechanical disconnector 2-3 in the DC power transmission line 13, and the connection point j2.

The mechanical disconnector 2-1 is provided on the side opposite to the connection point j with respect to the mechanical disconnector 2A-1 in the DC power transmission line 11. The mechanical disconnector 2-2 is provided on the side opposite to the connection point j with respect to the mechanical disconnector 2A-2 in the DC power transmission line 12. The mechanical disconnector 2-3 is provided on the side opposite to the connection point j with respect to the mechanical disconnector 2A-3 in the DC power transmission line 13.

The mechanical disconnector 2A-1 is an example of a first mechanical disconnector, the mechanical disconnector 2A-2 is an example of a second mechanical disconnector, and the mechanical disconnector 2A-3 is an example of a third mechanical disconnector. The mechanical disconnector 2-1 is an example of a fourth mechanical disconnector, the mechanical disconnector 2-2 is an example of a fifth mechanical disconnector, and the mechanical disconnector 2-3 is an example of a sixth mechanical disconnector.

In the sixth embodiment, a position at which the semiconductor circuit breaker 4 and the rectifying device 5A are provided in the common auxiliary line 20 is between the connection point j and the connection point j2. The connection point j2 is disposed at a position at which the auxiliary lines 21 to 26 and the common auxiliary line 20 are electrically connected to each other.

For the commutation device 7 of the sixth embodiment, for example, the commutation devices 7A, 7B, and 7C illustrated in FIG. 3 described above can be applied. The commutation device 7 is provided such that the junction point j2 side has a higher potential than the junction point j 3-2 side.

Here, an operation of the DC current breaking device 1 of the sixth embodiment will be described. Description will be given assuming that a system fault has occurred in the DC power transmission line 12 as illustrated in FIG. 10. The fault current IA flows due to the above system fault.

When the control unit 9 detects the system fault, the control unit 9 causes the semiconductor circuit breaker 4 to turn to the ON state, and causes the commutation device 7-2 corresponding to the DC power transmission line 12 in which the system fault has occurred, to turn to an operable state (an ON state). Thereby, a closed circuit including the commutation device 7-2, the rectifying device 5-2, and the mechanical disconnector 2-2A through the connection point j is formed. When a current Icc flows through the closed circuit passing through the connection point j, the fault current IA flowing through the mechanical disconnector 2-2 and the mechanical disconnector 2A-2 is canceled out and a substantially zero current state is caused.

As described above, the mechanical disconnector 2-2 belonging to the DC power transmission line 12 in which the system fault has occurred is present in the closed circuit including the commutation device 7-2. The fault current IA flowing through the mechanical disconnector 2-2 is commutated to the semiconductor circuit breaker 4, and the current Ic passing through the rectifying device 5-2 flows. Thus, when the mechanical disconnector 2-2 enters a zero current state, the mechanical disconnector 2-2 can be caused to turn to the OFF state.

Next, the control unit 9 causes the mechanical disconnector 2-2 in the zero current state to turn to the OFF state. Further, the control unit 9 causes the mechanical disconnector 2A-2 in the zero current state to turn to the OFF state, and then causes the semiconductor circuit breaker 4 to enter the OFF state. By causing the semiconductor circuit breaker 4 to enter the OFF state, energy generated at both ends of the semiconductor circuit breaker 4 is consumed by the arrester 40.

The control unit 9 causes the fault current IA to be commutated to the semiconductor circuit breaker 4, causes the mechanical disconnector 2-2 and the mechanical disconnector 2A-2 to turn to the OFF state, and then causes the commutation device 7-2 to turn to the OFF state.

According to the above procedure, the DC current breaking device 1 can break the current flowing through the DC power transmission line 12 in which the system fault has occurred. The above operation is the same for the other DC power transmission cables.

According to the sixth embodiment, since the mechanical disconnector 2A-1 is an example of the first mechanical disconnector, the mechanical disconnector 2A-2 is an example of the second mechanical disconnector, the mechanical disconnector 2-1 is an example of the fourth mechanical disconnector, the mechanical disconnector 2-2 is an example of the fifth mechanical disconnector, the first unit is the commutation device 7, and the second unit is the semiconductor circuit breaker 4, the commutation device 7 can commutate the current relevant to the DC power transmission line 11 or the DC power transmission line 12, in addition to achievement of the same effects as in the first embodiment.

### (Seventh embodiment)

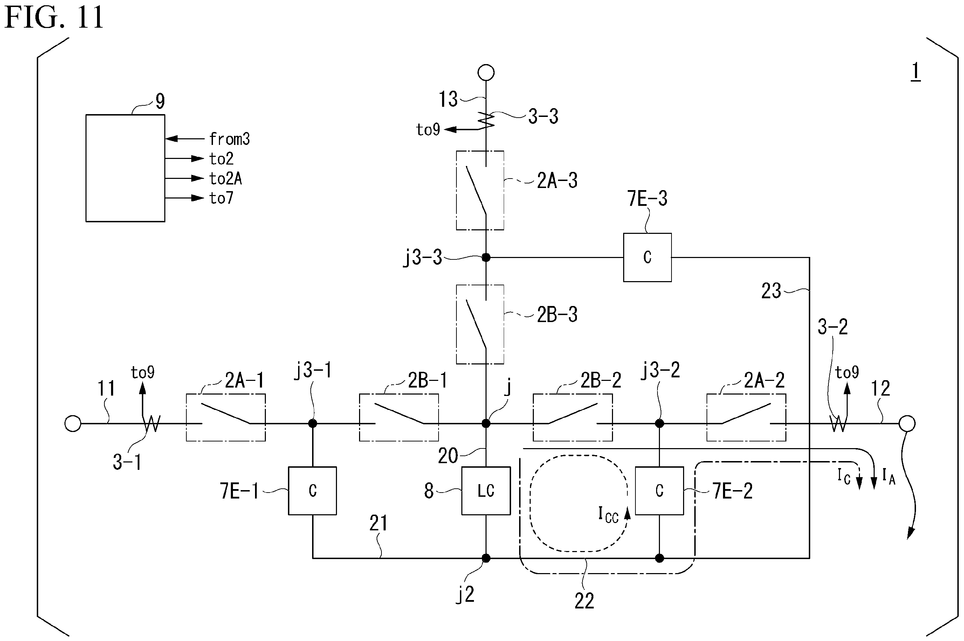

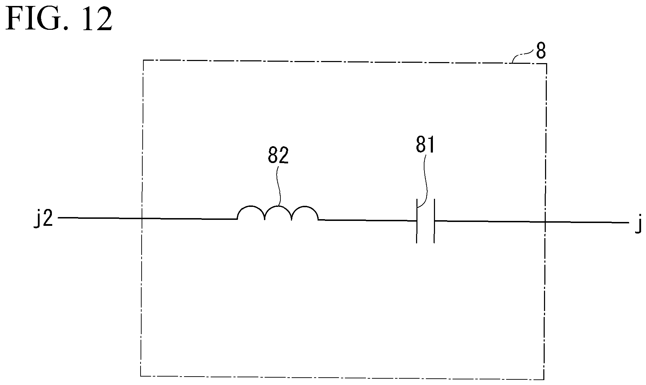

A DC current breaking device according to a seventh embodiment will be described with reference to FIGS. 11 and 12. FIG. 11 is a configuration diagram of the DC current breaking device according to the seventh embodiment. Differences from FIG. 10 will be mainly described.

A DC current breaking device 1 illustrated in FIG. 11 includes mechanical disconnectors 2B-1 to 2B-3, mechanical disconnectors 2A-1 to 2A-3, current transformers 3-1 to 3-3, commutation devices (C) 7E-1 to 7E-3, a resonator (LC) 8, and a control unit 9.

Differences from the case of the sixth embodiment will be described. The DC current breaking device 1 of the sixth embodiment does not include the semiconductor circuit breaker (S) 4, the rectifying devices 5-1 to 5-3, the rectifying device 5A, and the auxiliary lines 24 to 26, and instead includes the resonator 8. The resonator 8 is an example of a resonance circuit. Further, types of the mechanical disconnector 2 and the commutation device 7 are different from each other.

The common auxiliary line 20 is provided with the resonator 8, and the resonator 8 is connected between the connection points j and j2.

FIG. 12 is a configuration diagram of the resonator 8 according to the seventh embodiment. As illustrated in FIG. 12, the resonator 8 is an example of a series resonance circuit including a capacitor 81 and a reactor 82. Resonance occurs at a frequency determined by the capacitor 81 and the reactor 82.

As illustrated in FIG. 11, the auxiliary line 21 is provided with a commutation device 7E-1, the auxiliary line 22 is provided with a commutation device 7E-2, and the auxiliary line 23 is provided with a commutation device 7E-3. For example, the commutation devices 7E-1 to 7E-3 are configured as the full-bridge type commutation device 7E illustrated in FIG. 8B described above and configured to be able to output positive and negative voltages. The commutation devices 7E-1 to 7E-3 operate to increase current oscillation of the resonator 8.

For example, the mechanical disconnectors 2B-1 to 2B-3 are circuit breakers configured in the same structure and having a function of breaking a current. The mechanical disconnectors 2A-1 to 2A-3 are disconnectors configured in the same structure and having high withstand voltage characteristics.

An operation of the DC current breaking device 1 of the seventh embodiment will be described herein. Description will be given assuming that a system fault has occurred in the DC power transmission line 12 as illustrated in FIG. 11. The fault current I_{A} flows due to the above system fault.

When the control unit 9 detects the system fault, the control unit 9 causes the commutation device 7E-2 corresponding to the DC power transmission line 12 in which the system fault has occurred, to turn to an operable state (an ON state). Thereby, the commutation device 7E-2 can increase a resonance current of the resonator 8. In this case, a closed circuit including the resonator 8, the commutation device 7E-2, and the mechanical disconnector 2B-2 through the connection point j is formed. When a current Icc due to resonance flows through the closed circuit passing through the connection point j and an amplitude of the current Icc is increased, the fault current I_{A} flowing through the mechanical disconnector 2B-2 and the mechanical disconnector 2A-2 is canceled out and a substantially zero current state is caused.

As described above, the mechanical disconnector 2B-2 belonging to the DC power transmission line 12 in which the system fault has occurred is present in the closed circuit including the commutation device 7E-2. The fault current IA flowing through the mechanical disconnector 2B-2 is limited by the commutation device 7E-2, and the current Ic passing through the commutation device 7E-2 flows. Thus, when the mechanical disconnector 2B-2 enters a zero current state, the mechanical disconnector 2B-2 can be caused to turn to the OFF state.

Next, the control unit 9 causes the mechanical disconnector 2B-2 to turn to the OFF state. Energy generated between electrical contacts of the mechanical disconnector 2B-2 by causing the mechanical disconnector 2B-2 to enter the OFF state is consumed by the arrester 202.

The control unit 9 stops an operated state of the commutation device 7E-2 after causing the mechanical disconnector 2B-2 to turn to the OFF state.

Finally, the control unit 9 causes the mechanical disconnector 2A-2 in the zero current state to turn to the OFF state.

According to the above procedure, the DC current breaking device 1 can break the current flowing through the DC power transmission line 12 in which the system fault has occurred.

The above operation is the same for the other DC power transmission cables. The number of the resonators 8 is one, and the resonator 8 is shared by the respective DC power transmission cables. Thereby, it becomes unnecessary for the resonator 8 to be provided in each DC power transmission cable, and it is possible to achieve a simpler configuration.

Further, the DC current breaking device 1 does not include one semiconductor circuit breaker 4, and includes the resonator 8 instead of the semiconductor circuit breaker 4. The resonator 8 is configured as a combination of passive components, and can be configured more simply than the semiconductor circuit breaker 4.

Even when the system fault occurs in the DC power transmission cable of any one of the DC power transmission lines 11 to 13, it is possible to disconnect the DC power transmission cable in which the system fault has occurred.

According to the seventh embodiment, the DC current breaking device 1 is provided in the DC power transmission circuit in which at least the DC power transmission line 11 and the DC power transmission line 12 are electrically connected to each other at the connection point j, in addition to achievement of the same effects as in the first embodiment. The DC current breaking device 1 includes the mechanical disconnectors 2B-1 and 2B-2, the auxiliary line 21, the auxiliary line 22, the common auxiliary line 20, the resonator 8, and the commutation devices 7-1 and 7-2. The mechanical disconnector 2B-1 is provided in the DC power transmission line 11. The mechanical disconnector 2B-1 is provided in the DC power transmission line 12. The auxiliary line 21 is electrically connected to the junction point j3-1 located on the side opposite to the connection point j with respect to the mechanical disconnector 2B-1 in the DC power transmission line 11. The auxiliary line 22 is electrically connected to the junction point j3-2 located on the side opposite to the connection point j with respect to the mechanical disconnector 2B-2 in the DC power transmission line 12. The common auxiliary line 20 is electrically connected between the connection point j2 to which the auxiliary line 21 and the auxiliary line 22 are electrically connected, and the connection point j. The resonator 8 is provided in the common auxiliary line 20 and outputs a vibrating signal. The commutation devices 7-1 and 7-2 are respectively provided in a first line that is the DC power transmission line 11 or the auxiliary line 21 and a second line that is the DC power transmission line 12 or the auxiliary line 22. The commutation devices 7-1 and 7-2 commutate the current flowing through the DC power transmission line 11 or the DC power transmission line 12 when a predetermined condition has been satisfied. Thereby, the commutation devices 7-1 and 7-2 can start commutation when a voltage generated on the basis of the signal supplied from the resonator 8 exceeds a predetermined voltage.

The control unit 9 controls respective states of the mechanical disconnector 2B and the commutation device 7 such that the states are brought into an OFF state in which the current is blocked and an ON state in which the current flows. In a steady operation until a system fault occurs in the DC power transmission line 11 or the DC power transmission line 12, the control unit 9 operates the mechanical disconnector 2B in an ON state and the commutation device 7 in an OFF state. When the system fault has occurred, the control unit 9 operates the commutation device 7-1 or 7-2 so that a substantially zero current state of the current flowing through the mechanical disconnector 2 belonging to the DC power transmission line that is present in a closed current circuit including the resonator 8 and the commutation device 7-1 or 7-2 and in which the system fault has occurred is created, and causes the mechanical disconnector 2B-1 or 2B-2 in the substantially zero current state to turn to the OFF state. Thus, it is possible to disconnect the DC power transmission cable in which the system fault has occurred.

According to at least one of the above embodiments, the DC current breaking device is provided in the DC power transmission circuit in which at least the first DC power transmission line and the second DC power transmission line are electrically connected to each other at the first connection point. The DC current breaking device includes the first mechanical disconnector, the second mechanical disconnector, the first auxiliary line, the second auxiliary line, the common auxiliary line, the first unit, and the second unit. The first mechanical disconnector is provided in the first DC power transmission line. The second mechanical disconnector is provided in the second DC power transmission line. The first auxiliary line is electrically connected to the first position located on the side opposite to the first connection point with respect to the mechanical disconnector in the first DC power transmission line. The second auxiliary line is electrically connected to the second position located on the side opposite to the first connection point with respect to the second mechanical disconnector in the second DC power transmission line. The common auxiliary line is electrically connected between the second connection point to which the first auxiliary line and the second auxiliary line are electrically connected, and the first connection point. The first unit is provided in the common auxiliary line. The second unit is provided in each of the first line that is the first DC power transmission line or the first auxiliary line, and the second line that is the second DC power transmission line or the second auxiliary line. One of the first unit and the second unit is the semiconductor circuit breaker that includes at least one semiconductor switching device and is capable of breaking a current. The other of the first unit and the second unit is the commutation device that commutates a current flowing through the first DC power transmission line or the second DC power transmission line so that the current flows through the semiconductor circuit breaker when the predetermined condition has been satisfied. Thereby, it is possible to more simply configure the DC current breaking device for breaking a fault current flowing through any of the DC power transmission cables at the connection point of the plurality of DC power transmission cables.

In the above embodiment, the case in which the mechanical disconnector 2 is provided on the positive electrode side of the DC power transmission circuit has been described. However, the embodiment does not limit provision of the mechanical disconnector 2 on the negative electrode side instead of the positive electrode side, or provision of the breaking mechanical disconnector 2 on both the positive electrode side and the negative electrode side.

### [Reference Signs List]

11, 12, 13, 14 DC power transmission line (DC power transmission cable)
1 DC current breaking device (DC current breaking device)
2, 2A, 2B Mechanical disconnector (mechanical contact type current disconnector)
3 Current transformer
4 Semiconductor circuit breaker
40 Arrester
41 Semiconductor switching device
43 Auxiliary semiconductor circuit breaker
5,5A Rectifying device
7, 7A, 7B, 7C, 7D, 7E, 7T commutation device
71 Capacitor
72, 74, 75 Semiconductor switching device
73 Rectifier
8 Resonator
81 Capacitor
82 Reactor
9 DC current breaking device
10 Converter
10A Semiconductor converter
10B Transformer
10C Mechanical contact type current disconnector
10D Capacitor
j, j2 Connection point
j3, j4, j5 Junction point

## Claims

1. A DC current breaking device (1) provided in a DC power transmission circuit in which at least a first DC power transmission line (11) and a second DC power transmission line (12) are electrically connected to each other at a first connection point (j), the DC current breaking device (1) comprising:
a first mechanical switch (2-1) provided in the first DC power transmission line (11);
a second mechanical switch (2-2) provided in the second DC power transmission line (12);
a first auxiliary line (21) electrically connected to a first position (j3-1) located on the side opposite to the first connection point (j) with respect to the first mechanical switch (2-1) in the first DC power transmission line (11);
a second auxiliary line (22) electrically connected to a second position (j3-2) located on the side opposite to the first connection point (j) with respect to the second mechanical switch (2-2) in the second DC power transmission line (12);
a common auxiliary line (20) electrically connected between a second connection point (j2) to which the first auxiliary line (21) and the second auxiliary line (22) are electrically connected, and the first connection point (j);
a first unit provided in the common auxiliary line (20); and
a second unit provided on each of a first line, the first line being the first DC power transmission line (11) or the first auxiliary line (21), and a second line, the second line being the second DC power transmission line (12) or the second auxiliary line (22),
**characterized in that**
one of the first unit and the second unit is a semiconductor circuit breaker (4), the semiconductor circuit breaker (4) including at least one semiconductor switching device (41) and being capable of breaking a current, and
the other of the first unit and the second unit is a commutation device (7) configured to commutate a current flowing through the first DC power transmission line (11) or the second DC power transmission line (12) so that the current flows through the semiconductor circuit breaker (4) when a predetermined condition has been satisfied.

2. The DC current breaking device (1) according to claim 1,
wherein the DC power transmission circuit includes a third DC power transmission line (13) electrically connected to the first connection point (j),
the DC current breaking device (1) further includes
a third mechanical switch (2-3) provided in the third DC power transmission line (13), and
a third auxiliary line (23) electrically connected to a third position (j3-3) located on the side opposite to the first connection point (j) with respect to the third mechanical switch (2-3) in the third DC power transmission line (13),
the second unit is also provided in a third line, the third line being the third DC power transmission line (13) or the third auxiliary line (23).

3. The DC current breaking device (1) according to claim 1,
wherein the first unit is the semiconductor circuit breaker (4), and
the second unit is the commutation device (7).

4. The DC current breaking device (1) according to claim 3, wherein the commutation device (7-1, 7-2) is provided on each of the first auxiliary line (21) and the second auxiliary line (22).

5. The DC current breaking device (1) according to claim 4, further comprising:
a first rectifying device (5-1) provided in the first auxiliary line (21) and provided in a direction allowing a current commutated by the commutation device (7-1) to flow; and
a second rectifying device (5-2) provided in the second auxiliary line (22) and provided in the direction allowing the current commutated by the commutation device (7-2) to flow.

6. The DC current breaking device (1) according to claim 3, wherein the commutation device (7-1, 7-2) is provided in each of a first section between the first position (j3-1) in the first DC power transmission line (11) and the first connection point (j), and a second section between the second position (j3-2) in the second DC power transmission line (12) and the first connection point (j).

7. The DC current breaking device (1) according to claim 6, further comprising:
a first rectifying device (5-1) provided in the first auxiliary line (21) and provided in a direction allowing a current commutated by the commutation device (7-1) to flow; and
a second rectifying device (5-2) provided in the second auxiliary line (22) and provided in the direction allowing the current commutated by the commutation device (7-2) to flow.

8. The DC current breaking device (1) according to claim 1,
wherein the first unit is the commutation device (7), and
the second unit is the semiconductor circuit breaker (4-1, 4-2), and is provided in each of the first auxiliary line (21) and the second auxiliary line (22).

9. The DC current breaking device (1) according to claim 8, further comprising
a rectifying device (5) provided electrically in series with the first unit in a direction allowing the current commutated by the commutation device (7) to flow.

10. The DC current breaking device according to claim 1, further comprising:
a fourth mechanical switch (2A-1) provided on the side opposite to the first connection point (j) with respect to the first mechanical switch (2-1) in the first DC power transmission line (11);
a fifth mechanical switch (2A-2) provided on the side opposite to the first connection point (j) with respect to the second mechanical switch (2-2) in the second DC power transmission line (12);
a fourth auxiliary line (24) electrically connected to a fourth position (j5-1) located on the side opposite to the first connection point (j) with respect to the fourth mechanical switch (2A-1) in the first DC power transmission line (11), and the second connection point (j2); and
a fifth auxiliary line (25) electrically connected to a fifth position (j 5-2) located on the side opposite to the first connection point (j) with respect to the fifth mechanical switch (2A-2) in the second DC power transmission line (12), and the second connection point (j2).

11. The DC current breaking device (1) according to claim 10,
wherein the first unit is the semiconductor circuit breaker (4), and
the second unit is the commutation device (7).

12. The DC current breaking device (1) according to claim 10, wherein a position at which the semiconductor circuit breaker (4) is provided in the common auxiliary line (20) is between a position at which the first auxiliary line (21), the second auxiliary line (22), and the common auxiliary line (20) are electrically connected, and the second connection point (j2).

13. The DC current breaking device according to claim 1, wherein the commutation device (7) includes one semiconductor switching device (72) or a plurality of semiconductor switching devices (72, 74, 75) connected in series and/or in parallel.

14. The DC current breaking device (1) according to claim 1, wherein the commutation device (7) includes one full bridge unit or two or more full bridge units connected in series, and in the full bridge unit, any two of one or more legs (703, 704) in which a plurality of semiconductor switching devices (72, 74, 75) are connected in series and one or more legs (701, 702) in which one or more semiconductor switching devices (72) and one or more rectifying devices (73) are connected in series, and at least one capacitor (71) are connected in parallel.

15. The DC current breaking device (1) according to claim 1, wherein the commutation device (7) includes one half bridge unit or two or more half bridge units connected in series, and in the half bridge unit, any one of a leg (703, 704) in which a plurality of semiconductor switching devices (72, 74, 75) are connected in series and a leg (701, 702) in which at least one semiconductor switching device (72) and at least one rectifying device (73) are connected in series, and at least one capacitor (71) are connected in parallel.

16. The DC current breaking device (1) according to claim 1,
wherein the semiconductor circuit breaker (4) includes two or more semiconductor switching devices (41), and
the two or more semiconductor switching devices (41) are connected in series or in parallel, with directions of polarities of the two or more semiconductor switching devices (41) being aligned uniformly.

17. The DC current breaking device (1) according to claim 1, further comprising:
a control unit (9) configured to control respective states of the first mechanical switch (2-1), the second mechanical switch (2-2), the first unit, and the second unit such that the states are brought into an OFF state in which a current is blocked and an ON state in which a current flows,
wherein the control unit (9) is configured to
control the first mechanical switch (2-1) and the second mechanical switch (2-2) such that the first mechanical switch (2-1) or the second mechanical switch (2-2) are brought into the ON state and the first unit and the second unit such that the first unit and the second unit are brought into the OFF state in a steady operation until a system fault occurs in the first DC power transmission line (11) or the second DC power transmission line (12),
cause the first unit, and the second unit corresponding to the DC power transmission line in which the system fault has occurred among the first DC power transmission line (11) and the second DC power transmission line (12) to turn to the ON state when the system fault has occurred, so that a substantially zero current state is made for a current flowing through a mechanical switch belonging to the DC power transmission line in which the system fault has occurred, the mechanical switch being one of the first mechanical switch (2-1) and the second mechanical switch (2-2),
cause the mechanical switch in the substantially zero current state to turn to the OFF state, and
cause the first unit, and the second unit corresponding to the DC power transmission line in which the system fault has occurred to enter the OFF state.

18. The DC current breaking device (1) according to claim 6, further comprising:
a control unit (9) configured to control respective states of the first mechanical switch (2-1), the second mechanical switch (2-2), the semiconductor circuit breaker (4), and the commutation device (7) such that the states are brought into an OFF state in which a current is blocked and an ON state in which a current flows,
wherein the control unit (9) is configured to
operate the first mechanical switch (2-1), the second mechanical switch (2-2), and the commutation device (7) in the ON state and the semiconductor circuit breaker (4) in an OFF state in a steady operation until a system fault occurs in the first DC power transmission line (11) or the second DC power transmission line (12),
cause the semiconductor circuit breaker (4) to turn to the ON state and the commutation device (7) to turn to the OFF state when the system fault has occurred, so that a current is commutated to the semiconductor circuit breaker (4),
cause any one of the first mechanical switch (2-1) and the second mechanical switch (2-2) in a substantially zero current state to turn to the OFF state, and
cause the semiconductor circuit breaker (4) to enter the OFF state.

19. A DC current breaking device (1) provided in a DC power transmission circuit in which at least a first DC power transmission line (11) and a second DC power transmission line (12) are electrically connected to each other at a first connection point (j), the DC current breaking device (1) comprising:
a first mechanical switch (2B-1) provided in the first DC power transmission line (11);
a second mechanical switch (2B-2) provided in the second DC power transmission line (12);
a first auxiliary line (21) electrically connected to a first position (j3-1) located on the side opposite to the first connection point (j) with respect to the first mechanical switch (2B-1) in the first DC power transmission line (11);
a second auxiliary line (22) electrically connected to a second position (j3-2) located on the side opposite to the first connection point (j) with respect to the second mechanical switch (2B-2) in the second DC power transmission line (12);
a common auxiliary line (20) electrically connected between a second connection point (j2) to which the first auxiliary line (21) and the second auxiliary line (22) are electrically connected, and the first connection point (j);
a resonator (8) provided in the common auxiliary line (20) and outputting an oscillated current;
**characterized by**
a commutation device (7E-1, 7E-2) provided in each of the first auxiliary line (21) and the second auxiliary line (22), and being configured to commutate a current flowing through the first DC power transmission line (11) or the second DC power transmission line when a predetermined condition has been satisfied; and
a control unit (9) configured to, when the control unit (9) detects a system fault in the first DC power transmission line (11), cause the commutation device (7E-1) corresponding to the first DC power transmission line (11) in which the system fault has occurred, to turn to an operable state, and configured to, when the control unit (9) detects a system fault in the second DC power transmission line (12), cause the commutation device (7E-2) corresponding to the second DC power transmission line (12) in which the system fault has occurred, to turn to an operable state.

20. The DC current breaking device (1) according to claim 19,
wherein the control unit (9) is configured to control respective states of the first mechanical switch (2B-1), the second mechanical switch (2B-2), and the commutation device (7E-1, 7E-2) such that the states are brought into an OFF state in which a current is blocked and an ON state in which a current flows,
wherein the control unit (9) is configured to operate the first mechanical switch (2B-1) and the second mechanical switch (2B-2) in an ON state and the commutation device (7E-1, 7E-2) in an OFF state in a steady operation until the system fault occurs in the first DC power transmission line (11) or the second DC power transmission line (12),
wherein the control unit (9) is configured to cause the commutation device (7E-1, 7E-2) corresponding to the DC power transmission line (11, 12) in which the system fault has occurred, to turn to an operable state, so that a substantially zero current state of a current flowing through the mechanical switch (2B-1, 2B-2) belonging to the DC power transmission line (11, 12), the DC power transmission line (11, 12) being present in a closed current circuit including the resonator (8) and the commutation device (7E-1, 7E-2) and the system fault having occurred in the DC power transmission line (11, 12), and the mechanical switch being at least one of the first mechanical switch (2B-1) and the second mechanical switch (2B-2), is created when the system fault has occurred, and
wherein the control unit (9) is configured to cause the mechanical switch (2B-1, 2B-2) in the substantially zero current state to turn to the OFF state.

## Patentansprüche

1. Gleichstrom-Unterbrechungsvorrichtung (1), die in einer Gleichstrom-Leistungsübertragungsschaltung vorgesehen ist, in der mindestens eine erste Gleichstrom-Leistungsübertragungsleitung (11) und eine zweite Gleichstrom-Leistungsübertragungsleitung (12) an einem ersten Verbindungspunkt (j) elektrisch miteinander verbunden sind, wobei die Gleichstrom-Unterbrechungsvorrichtung (1) umfasst:
einen ersten mechanischen Schalter (2-1), der in der ersten Gleichstrom-Leistungsübertragungsleitung (11) vorgesehen ist;
einen zweiten mechanischen Schalter (2-2), der in der zweiten Gleichstrom-Leistungsübertragungsleitung (12) vorgesehen ist;
eine erste Hilfsleitung (21), die elektrisch mit einer ersten Position (j3-1) verbunden ist, die sich in Bezug auf den ersten mechanischen Schalter (2-1) auf der dem ersten Verbindungspunkt (j) gegenüberliegenden Seite in der ersten Gleichstrom-Leistungsübertragungsleitung (11) befindet;
eine zweite Hilfsleitung (22), die elektrisch mit einer zweiten Position (j3-2) verbunden ist, die sich in Bezug auf den zweiten mechanischen Schalter (2-2) auf der dem ersten Verbindungspunkt (j) gegenüberliegenden Seite in der zweiten Gleichstrom-Leistungsübertragungsleitung (12) befindet;
eine gemeinsame Hilfsleitung (20), die elektrisch zwischen einem zweiten Verbindungspunkt (j2), mit dem die erste Hilfsleitung (21) und die zweite Hilfsleitung (22) elektrisch verbunden sind, und dem ersten Verbindungspunkt (j) verbunden ist;
eine erste Einheit, die in der gemeinsamen Hilfsleitung (20) vorgesehen ist; und
eine zweite Einheit, die auf jeder einer ersten Leitung, wobei die erste Leitung die erste Gleichstrom-Leistungsübertragungsleitung (11) oder die erste Hilfsleitung (21) ist, und einer zweiten Leitung, wobei die zweite Leitung die zweite Gleichstrom-Leistungsübertragungsleitung (12) oder die zweite Hilfsleitung ist (22) ist, vorgesehen ist,
**dadurch gekennzeichnet, dass**
eine der ersten Einheit und der zweiten Einheit ein Halbleiterleistungsschalter (4) ist, wobei der Halbleiterleistungsschalter (4) mindestens eine Halbleiterschaltvorrichtung (41) aufweist und in der Lage ist, einen Strom zu unterbrechen, und
die andere der ersten Einheit und der zweiten Einheit eine Kommutierungsvorrichtung (7) ist, die dazu ausgebildet ist, einen Strom zu kommutieren, der durch die erste Gleichstrom-Leistungsübertragungsleitung (11) oder die zweite Gleichstrom-Leistungsübertragungsleitung (12) fließt, so dass der Strom durch die Halbleiterleistungsschalter (4) fließt, wenn eine vorbestimmte Bedingung erfüllt ist.

2. Gleichstrom-Unterbrechungsvorrichtung (1) nach Anspruch 1,
wobei die Gleichstrom-Leistungsübertragungsschaltung eine dritte Gleichstrom-Leistungsübertragungsleitung (13) aufweist, die elektrisch mit dem ersten Verbindungspunkt (j) verbunden ist,
wobei die Gleichstrom-Unterbrechungsvorrichtung (1) ferner einen dritten mechanischen Schalter (2-3) aufweist, der in der dritten Gleichstrom-Leistungsübertragungsleitung (13) vorgesehen ist, und
eine dritte Hilfsleitung (23), die elektrisch mit einer dritten Position (j3-3) verbunden ist, die sich in Bezug auf den dritten mechanischen Schalter (2-3) auf der dem ersten Verbindungspunkt (j) gegenüberliegenden Seite in der dritten Gleichstrom-Leistungsübertragungsleitung (13) befindet,
wobei die zweite Einheit auch in einer dritten Leitung vorgesehen ist, wobei die dritte Leitung die dritte Gleichstrom-Leistungsübertragungsleitung (13) oder die dritte Hilfsleitung (23) ist.

3. Gleichstrom-Unterbrechungsvorrichtung (1) nach Anspruch 1,
wobei die erste Einheit der Halbleiterleistungsschalter (4) ist, und
die zweite Einheit die Kommutierungsvorrichtung (7) ist.

4. Gleichstrom-Unterbrechungsvorrichtung (1) nach Anspruch 3, wobei die Kommutierungsvorrichtung (7-1, 7-2) sowohl auf der ersten Hilfsleitung (21) als auch auf der zweiten Hilfsleitung (22) vorgesehen ist.

5. Gleichstrom-Unterbrechungsvorrichtung (1) nach Anspruch 4, ferner umfassend:
eine erste Gleichrichtervorrichtung (5-1), die in der ersten Hilfsleitung (21) vorgesehen ist und in einer Richtung vorgesehen ist, die es einem durch die Kommutierungsvorrichtung (7-1) kommutierten Strom ermöglicht, zu fließen; und
eine zweite Gleichrichtervorrichtung (5-2), die in der zweiten Hilfsleitung (22) und in der Richtung vorgesehen ist, die es dem durch die Kommutierungsvorrichtung (7-2) kommutierten Strom ermöglicht, zu fließen.

6. Gleichstrom-Unterbrechungsvorrichtung (1) nach Anspruch 3, wobei die Kommutierungsvorrichtung (7-1, 7-2) in jedem von einem ersten Abschnitt zwischen der ersten Position (j3-1) in der ersten Gleichstrom-Leistungsübertragungsleitung (11) und dem ersten Verbindungspunkt (j) und einem zweiten Abschnitt zwischen der zweiten Position (j3-2) in der zweiten Gleichstrom-Leistungsübertragungsleitung (12) und dem ersten Verbindungspunkt (j) vorgesehen ist.

7. Gleichstrom-Unterbrechungsvorrichtung (1) nach Anspruch 6, ferner umfassend:
eine erste Gleichrichtervorrichtung (5-1), die in der ersten Hilfsleitung (21) vorgesehen ist und in einer Richtung vorgesehen ist, die es einem durch die Kommutierungsvorrichtung (7-1) kommutierten Strom ermöglicht, zu fließen; und
eine zweite Gleichrichtervorrichtung (5-2), die in der zweiten Hilfsleitung (22) vorgesehen ist und in der Richtung vorgesehen ist, die es dem durch die Kommutierungsvorrichtung (7-2) kommutierten Strom ermöglicht, zu fließen.

8. Gleichstrom-Unterbrechungsvorrichtung (1) nach Anspruch 1,
wobei die erste Einheit die Kommutierungsvorrichtung (7) ist, und
die zweite Einheit der Halbleiterleistungsschalter (4-1, 4-2) ist, und sowohl in der ersten Hilfsleitung (21) als auch in der zweiten Hilfsleitung (22) vorgesehen ist.

9. Gleichstrom-Unterbrechungsvorrichtung (1) nach Anspruch 8, ferner umfassend
eine Gleichrichtervorrichtung (5), die elektrisch in Reihe mit der ersten Einheit in einer Richtung vorgesehen ist, die es dem durch die Kommutierungsvorrichtung (7) kommutierten Strom ermöglicht, zu fließen.

10. Gleichstrom-Unterbrechungsvorrichtung nach Anspruch 1, ferner umfassend:
einen vierten mechanischen Schalter (2A-1), der in Bezug auf den ersten mechanischen Schalter (2-1) auf der dem ersten Verbindungspunkt (j) gegenüberliegenden Seite in der ersten Gleichstrom-Leistungsübertragungsleitung (11) vorgesehen ist;
einen fünften mechanischen Schalter (2A-2), der in Bezug auf den zweiten mechanischen Schalter (2-2) auf der dem ersten Verbindungspunkt (j) gegenüberliegenden Seite in der zweiten Gleichstrom-Leistungsübertragungsleitung (12) vorgesehen ist;
eine vierte Hilfsleitung (24), die elektrisch mit einer vierten Position (j5-1), die sich in Bezug auf den vierten mechanischen Schalter (2A-1) auf der dem ersten Verbindungspunkt (j) gegenüberliegenden Seite in der ersten Gleichstrom-Leistungsübertragungsleitung (11) befindet, und dem zweiten Verbindungspunkt (j2) verbunden ist; und
eine fünfte Hilfsleitung (25), die elektrisch mit einer fünften Position (j5-2), die sich in Bezug auf den fünften mechanischen Schalter (2A-2) auf der dem ersten Verbindungspunkt (j) gegenüberliegenden Seite in der zweiten Gleichstrom-Leistungsübertragungsleitung (12) befindet, und dem zweiten Verbindungspunkt (j2) verbunden ist.

11. Gleichstrom-Unterbrechungsvorrichtung (1) nach Anspruch 10,
wobei die erste Einheit der Halbleiterleistungsschalter (4) ist, und
die zweite Einheit die Kommutierungsvorrichtung (7) ist.

12. Gleichstrom-Unterbrechungsvorrichtung (1) nach Anspruch 10, wobei eine Position, an der der Halbleiterleistungsschalter (4) in der gemeinsamen Hilfsleitung (20) vorgesehen ist, zwischen einer Position, an der die erste Hilfsleitung (21), die zweite Hilfsleitung (22) und die gemeinsame Hilfsleitung (20) elektrisch verbunden sind, und dem zweiten Verbindungspunkt (j2) liegt.

13. Gleichstrom-Unterbrechungsvorrichtung nach Anspruch 1, wobei die Kommutierungsvorrichtung (7) eine Halbleiterschaltvorrichtung (72) oder eine Vielzahl von in Reihe und/oder parallel geschaltete Halbleiterschaltvorrichtungen (72, 74, 75) aufweist.

14. Gleichstrom-Unterbrechungsvorrichtung (1) nach Anspruch 1, wobei die Kommutierungsvorrichtung (7) eine Vollbrückeneinheit oder zwei oder mehr in Reihe geschaltete Vollbrückeneinheiten aufweist, und in der Vollbrückeneinheit zwei beliebige von einem oder mehreren Zweigen (703, 704), in denen eine Vielzahl von Halbleiterschaltvorrichtungen (72 , 74, 75) in Reihe geschaltet sind, und einem oder mehreren Zweigen (701, 702), in denen eine oder mehrere Halbleiterschaltvorrichtungen (72) und eine oder mehrere Gleichrichtervorrichtungen (73) in Reihe geschaltet sind, und mindestens einen Kondensator (71) parallel geschaltet sind.

15. Gleichstrom-Unterbrechungsvorrichtung (1) nach Anspruch 1, wobei die Kommutierungsvorrichtung (7) eine Halbbrückeneinheit oder zwei oder mehr Halbbrückeneinheiten, die in Reihe geschaltet sind, aufweist, und in der Halbbrückeneinheit ein beliebiger Zweig (703, 704), in dem eine Vielzahl von Halbleiterschaltvorrichtungen (72, 74, 75) in Reihe geschaltet sind, und ein Zweig (701, 702), in dem mindestens eine Halbleiterschaltvorrichtung (72) und mindestens eine Gleichrichtervorrichtung (73) in Reihe geschaltet sind, und mindestens ein Kondensator (71) parallel geschaltet sind.

16. Gleichstrom-Unterbrechungsvorrichtung (1) nach Anspruch 1,
wobei der Halbleiterleistungsschalter (4) zwei oder mehr Halbleiterschaltvorrichtungen (41) aufweist, und
die zwei oder mehr Halbleiterschaltvorrichtungen (41) in Reihe oder parallel geschaltet sind, wobei Polaritätsrichtungen der zwei oder mehr Halbleiterschaltvorrichtungen (41) einheitlich ausgerichtet sind.

17. Gleichstrom-Unterbrechungsvorrichtung (1) nach Anspruch 1, ferner umfassend:
eine Steuereinheit (9), die dazu ausgebildet ist, jeweilige Zustände des ersten mechanischen Schalters (2-1), des zweiten mechanischen Schalters (2-2), der ersten Einheit und der zweiten Einheit zu steuern, so dass die Zustände in einen AUS-Zustand, in dem ein Strom blockiert ist, und einen EIN-Zustand, in dem ein Strom fließt, gebracht werden,
wobei die Steuereinheit (9) dazu ausgebildet ist,
den ersten mechanischen Schalter (2-1) und den zweiten mechanischen Schalter (2-2) zu steuern, so dass der erste mechanische Schalter (2-1) oder der zweite mechanische Schalter (2-2 ) in den EIN-Zustand gebracht werden, und die erste Einheit und die zweite Einheit, so dass die erste Einheit und die zweite Einheit in einem stationären Betrieb in den AUS-Zustand gebracht werden, bis ein Systemfehler in der ersten Gleichstrom-Leistungsübertragungsleitung (11) oder der zweiten Gleichstrom-Leistungsübertragungsleitung (12) auftritt,
zu bewirken, dass die erste Einheit, und die zweiten Einheit, die der Gleichstrom-Leistungsübertragungsleitung entspricht, in der der Systemfehler aufgetreten ist, unter der ersten Gleichstrom-Leistungsübertragungsleitung (11) und der zweiten Gleichstrom-Leistungsübertragungsleitung (12), in den EIN-Zustand überzugehen, wenn der Systemfehler aufgetreten ist, so dass ein im Wesentlichen stromloser Zustand für einen Strom hergestellt wird, der durch einen mechanischen Schalter fließt, der zu der Gleichstrom-Leistungsübertragungsleitung gehört, in der der Systemfehler aufgetreten ist, wobei der mechanische Schalter einer von dem ersten mechanischen Schalters (2-1) und dem zweiten mechanischen Schalters (2-2) ist,
zu bewirken, dass der mechanische Schalter in dem im Wesentlichen stromlosen Zustand in den AUS-Zustand übergeht, und
zu bewirken, dass die erste Einheit, und die zweite Einheit, die der Gleichstrom-Leistungsübertragungsleitung entspricht, in der der Systemfehler aufgetreten ist, in den AUS-Zustand eintritt.

18. Gleichstrom-Unterbrechungsvorrichtung (1) nach Anspruch 6, ferner umfassend:
eine Steuereinheit (9), die dazu ausgebildet ist, jeweilige Zustände des ersten mechanischen Schalters (2-1), des zweiten mechanischen Schalters (2-2), des Halbleiterleistungsschalters (4) und der Kommutierungsvorrichtung (7) zu steuern, so dass die Zustände in einen AUS-Zustand, in dem ein Strom blockiert ist, und einen EIN-Zustand, in dem ein Strom fließt, gebracht werden,
wobei die Steuereinheit (9) dazu ausgebildet ist,
den ersten mechanischen Schalter (2-1), den zweiten mechanischen Schalter (2-2) und die Kommutierungsvorrichtung (7) in dem EIN-Zustand und den Halbleiterleistungsschalter (4) in einem AUS-Zustand in einem stationären Betrieb zu betreiben, bis ein Systemfehler in der ersten Gleichstrom-Leistungsübertragungsleitung (11) oder der zweiten Gleichstrom-Leistungsübertragungsleitung (12) auftritt,
zu bewirken, dass der Halbleiterleistungsschalter (4) in den EIN-Zustand übergeht und die Kommutierungsvorrichtung (7) in den AUS-Zustand übergeht, wenn der Systemfehler aufgetreten ist, so dass ein Strom auf den Halbleiterleistungsschalter (4) kommutiert wird,
zu bewirken, dass einer von dem ersten mechanischen Schalter (2-1) und dem zweiten mechanischen Schalter (2-2) in einen im Wesentlichen stromlosen Zustand in den AUS-Zustand übergeht, und
zu bewirken, dass der Halbleiterleistungsschalter (4) in den AUS-Zustand eintritt.

19. Gleichstrom-Unterbrechungsvorrichtung (1), die in einem Gleichstrom-Leistungsübertragungskreis vorgesehen ist, in dem mindestens eine erste Gleichstrom-Leistungsübertragungsleitung (11) und eine zweite Gleichstrom-Leistungsübertragungsleitung (12) an einem ersten Verbindungspunkt (j) elektrisch miteinander verbunden sind, wobei die Gleichstrom-Unterbrechungsvorrichtung (1) umfasst:
einen ersten mechanischen Schalter (2B-1), der in der ersten Gleichstrom-Leistungsübertragungsleitung (11) vorgesehen ist;
einen zweiten mechanischen Schalter (2B-2), der in der zweiten Gleichstrom-Leistungsübertragungsleitung (12) vorgesehen ist;
eine erste Hilfsleitung (21), die elektrisch mit einer ersten Position (j3-1) verbunden ist, die sich in Bezug auf den ersten mechanischen Schalter (2B-1) auf der dem ersten Verbindungspunkt (j) gegenüberliegenden Seite in der ersten Gleichstrom-Leistungsübertragungsleitung (11) befindet;
eine zweite Hilfsleitung (22), die elektrisch mit einer zweiten Position (j3-2) verbunden ist, die sich in Bezug auf den zweiten mechanischen Schalter (2B-2) auf der dem ersten Verbindungspunkt (j) gegenüberliegenden Seite in der zweiten Gleichstrom-Leistungsübertragungsleitung (12) befindet;
eine gemeinsame Hilfsleitung (20), die elektrisch zwischen einem zweiten Verbindungspunkt (j2), mit dem die erste Hilfsleitung (21) und die zweite Hilfsleitung (22) elektrisch verbunden sind, und dem ersten Verbindungspunkt (j) verbunden ist;
einen Resonator (8), der in der gemeinsamen Hilfsleitung (20) vorgesehen ist und einen oszillierten Strom ausgibt;
**dadurch gekennzeichnet, dass**
eine Kommutierungsvorrichtung (7E-1, 7E-2) sowohl in der ersten Hilfsleitung (21) als auch in der zweiten Hilfsleitung (22) vorgesehen ist und dazu ausgebildet ist, einen Strom zu kommutieren, der durch die erste Gleichstrom-Leistungsübertragungsleitung (11) oder die zweite Gleichstrom-Leistungsübertragungsleitung fließt, wenn eine vorbestimmte Bedingung erfüllt worden ist; und
eine Steuereinheit (9), die dazu ausgebildet ist, wenn die Steuereinheit (9) einen Systemfehler in der ersten Gleichstrom-Leistungsübertragungsleitung (11) erkennt, zu bewirken, dass die Kommutierungsvorrichtung (7E-1), die der ersten Gleichstrom-Leistungsübertragungsleitung (11) entspricht, in der der Systemfehler aufgetreten ist, in einen betriebsbereiten Zustand übergeht, und dazu ausgebildet ist, wenn die Steuereinheit (9) einen Systemfehler in der zweiten Gleichstrom-Leistungsübertragungsleitung (12) erkennt, zu bewirken, dass die Kommutierungsvorrichtung (7E-2), die der zweiten Gleichstrom-Leistungsübertragungsleitung (12) entspricht, in der der Systemfehler aufgetreten ist, in einen betriebsbereiten Zustand übergeht.

20. Gleichstrom-Unterbrechungsvorrichtung (1) nach Anspruch 19,
wobei die Steuereinheit (9) dazu ausgebildet ist, jeweilige Zustände des ersten mechanischen Schalters (2B-1), des zweiten mechanischen Schalters (2B-2) und der Kommutierungsvorrichtung (7E-1, 7E-2) zu steuern, so dass die Zustände in einen AUS-Zustand, in dem ein Strom blockiert ist, und einen EIN-Zustand, in dem ein Strom fließt, gebracht werden,
wobei die Steuereinheit (9) dazu ausgebildet ist, den ersten mechanischen Schalter (2B-1) und den zweiten mechanischen Schalter (2B-2) in einem EIN-Zustand und die Kommutierungsvorrichtung (7E-1, 7E-2) in einem AUS-Zustand in einem stationären Betrieb zu betreiben, bis der Systemfehler in der ersten Gleichstrom-Leistungsübertragungsleitung (11) oder der zweiten Gleichstrom-Leistungsübertragungsleitung (12) auftritt,
wobei die Steuereinheit (9) dazu ausgebildet ist, zu bewirken, dass die Kommutierungsvorrichtung (7E-1, 7E-2), die der Gleichstrom-Leistungsübertragungsleitung (11, 12) entspricht, in der der Systemfehler aufgetreten ist, in einen betriebsbereiten Zustand übergeht, so dass ein im Wesentlichen stromloser Zustand eines Stroms, der durch den mechanischen Schalter (2B-1, 2B-2) fließt, der zu der Gleichstrom-Leistungsübertragungsleitung (11, 12) gehört, wobei der Gleichstrom-Leistungsübertragungsleitung (11, 12) in einem geschlossenen Stromkreis vorliegt, der den Resonator (8) und die Kommutierungsvorrichtung (7E-1, 7E-2) aufweist, und der Systemfehler in der Gleichstrom-Leistungsübertragungsleitung (11, 12) aufgetreten ist, und der mechanische Schalter mindestens einer von dem ersten mechanischen Schalter (2B-1) und dem zweiten mechanischen Schalter (2B-2) ist, erzeugt wird, wenn der Systemfehler aufgetreten ist, und
wobei die Steuereinheit (9) dazu ausgebildet ist, zu bewirken, dass der mechanische Schalter (2B-1, 2B-2) in dem im Wesentlichen stromlosen Zustand in den AUS-Zustand übergeht.

## Revendications

1. Dispositif de coupure de courant continu (1) prévu dans un circuit de transmission d'alimentation en CC dans lequel au moins une première ligne de transmission d'alimentation en CC (11) et une deuxième ligne de transmission d'alimentation en CC (12) sont connectées électriquement les unes aux autres à un premier point de connexion (j), le dispositif de coupure de courant continu (1) comprenant :
un premier interrupteur mécanique (2-1) prévu dans la première ligne de transmission d'alimentation en CC (11);
un deuxième interrupteur mécanique (2-2) prévu dans la deuxième ligne de transmission d'alimentation en CC (12);
une première ligne auxiliaire (21) connectée électriquement à une première position (j3-1) située du côté opposé au premier point de connexion (j) par rapport au premier interrupteur mécanique (2-1) dans la première ligne de transmission d'alimentation en courant continu (11);
une deuxième ligne auxiliaire (22) connectée électriquement à une deuxième position (j3-2) 15 située du côté opposé au premier point de connexion (j) par rapport au deuxième interrupteur mécanique (2-2) dans la deuxième ligne de transmission d'alimentation en CC (12) ;
une ligne auxiliaire commune (20) connectée électriquement entre un deuxième point de connexion (j2) auquel la première ligne auxiliaire (21) et la deuxième ligne auxiliaire (22) sont connectés électriquement, et le premier point de connexion (j) ;
une première unité prévue dans la ligne auxiliaire commune (20) ; et
une deuxième unité prévue sur chacune d'une première ligne, la première ligne étant la première ligne de transmission d'alimentation en CC (11) ou la première ligne auxiliaire (21), et une deuxième ligne, la deuxième ligne étant la deuxième ligne de transmission d'alimentation en CC (12) ou la deuxième ligne auxiliaire (22),
**caractérisé en ce que**
une de la première unité et de la deuxième unité est un disjoncteur à semi-conducteur (4), le disjoncteur à semi-conducteur (4) comprenant au moins un dispositif de commutation à semi-conducteur (41) et étant capable de couper un courant, et
l'autre parmi la première unité et la deuxième unité est un dispositif de commutation (7) configuré pour commuter un courant circulant dans la première ligne de transmission d'alimentation en CC (11) ou la deuxième ligne de transmission d'alimentation en CC (12) de sorte que le courant circule à travers le disjoncteur à semi-conducteur (4) lorsqu'une condition prédéterminée a été satisfaite

2. Dispositif de coupure de courant continu (1) selon la revendication 1,
dans lequel le circuit de transmission d'alimentation en CC comprend une troisième ligne de transmission d'alimentation en CC (13) connectée électriquement au premier point de connexion (j),
le dispositif de coupure de courant continu (1) comprend en outre un troisième interrupteur mécanique (2-3) prévu dans la troisième ligne de transmission d'alimentation en CC (13), et
une troisième ligne auxiliaire (23) connectée électriquement à une troisième position (j3-3) située du côté opposé au premier point de connexion (j) par rapport au troisième interrupteur mécanique (2-3) dans la troisième ligne de transmission d'alimentation en CC (13),
la deuxième unité est également prévue dans une troisième ligne, la troisième ligne étant la troisième ligne de transmission d'alimentation en CC (13) ou la troisième ligne auxiliaire (23).

3. Dispositif de coupure de courant continu (1) selon la revendication 1,
dans lequel la première unité est le disjoncteur à semi-conducteur (4) et
la deuxième unité est le dispositif de commutation (7).

4. Dispositif de coupure de courant continu (1) selon la revendication 3, dans lequel le dispositif de commutation (7-1, 7-2) est prévu sur chacune de la première ligne auxiliaire (21) et de la deuxième ligne auxiliaire (22).

5. Dispositif de coupure de courant continu (1) selon la revendication 4, comprenant en outre :
un premier dispositif de redressement (5-1) prévu dans la première ligne auxiliaire (21) et prévu dans une direction permettant à un courant commuté par le dispositif de commutation (7-1) de circuler ; et
un deuxième dispositif de redressement (5-2) prévu dans la deuxième ligne auxiliaire (22) et prévu dans la direction permettant au courant commuté par le dispositif de commutation (7-2) de circuler.

6. Dispositif de coupure de courant continu (1) selon la revendication 3, dans lequel le dispositif de commutation (7-1, 7-2) est prévu dans chacune d'une première section entre la première position (j3-1) dans la première ligne de transmission d'alimentation en CC (11) et le premier point de connexion (j), et une deuxième section entre la deuxième position (j3-2) dans la deuxième ligne de transmission d'alimentation en CC (12) et le premier point de connexion (j).

7. Dispositif de coupure de courant continu (1) selon la revendication 6, comprenant en outre :
un premier dispositif de redressement (5-1) prévu dans la première ligne auxiliaire (21) et prévu dans une direction permettant à un courant commuté par le dispositif de commutation (7-1) de circuler ; et
un deuxième dispositif de redressement (5-2) prévu dans la deuxième ligne auxiliaire (22) et prévu dans la direction permettant au courant commuté par le dispositif de commutation (7-2) de circuler.

8. Dispositif de coupure de courant continu (1) selon la revendication 1,
dans lequel la première unité est le dispositif de commutation (7), et
la deuxième unité est le disjoncteur à semi-conducteur (4-1, 4-2), et est prévue dans chacune de la première ligne auxiliaire (21) et de la deuxième ligne auxiliaire (22).

9. Dispositif de coupure de courant continu (1) selon la revendication 8, comprenant en outre
un dispositif de redressement (5) prévu électriquement en série avec le premier bloc dans une direction permettant au courant commuté par le dispositif de commutation (7) de circuler.

10. Dispositif de coupure de courant continu selon la revendication 1, comprenant en outre :
un quatrième interrupteur mécanique (2A-1) prévu sur le côté opposé au premier point de connexion (j) par rapport au premier interrupteur mécanique (2-1) dans la première ligne de transmission d'alimentation en CC (11) ;
un cinquième interrupteur mécanique (2A-2) prévu sur le côté opposé au premier point de connexion (j) par rapport au deuxième interrupteur mécanique (2-2) dans la deuxième ligne de transmission d'alimentation en CC (12);
une quatrième ligne auxiliaire (24) connectée électriquement à une quatrième position (j5-1) située du côté opposé au premier point de connexion (j) par rapport au quatrième interrupteur mécanique (2A-1) dans la première ligne de transmission d'alimentation en CC (11), et le deuxième point de connexion (j2); et
une cinquième ligne auxiliaire (25) connectée électriquement à une cinquième position (j5-2) située du côté opposé au premier point de connexion (j) par rapport au cinquième interrupteur mécanique (2A-2) dans la deuxième ligne de transmission d'alimentation en CC (12), et le deuxième point de connexion (j2).

11. Dispositif de coupure de courant continu (1) selon la revendication 10,
dans lequel la première unité est le disjoncteur à semi-conducteur (4) et
la deuxième unité est le dispositif de commutation (7).

12. Dispositif de coupure de courant continu (1) selon la revendication 10, dans lequel une position à laquelle le disjoncteur à semi-conducteur (4) est prévu dans la ligne auxiliaire commune (20) est entre une position à laquelle la première ligne auxiliaire (21), la deuxième ligne auxiliaire (22), et la ligne auxiliaire commune (20) sont connectées électriquement, et le deuxième point de connexion (j2).

13. Dispositif de coupure de courant continu selon la revendication 1, dans lequel le dispositif de commutation (7) comprend un dispositif de commutation à semi-conducteur (72) ou une pluralité de dispositifs de commutation à semi-conducteur (72, 74, 75) connectés en série et/ou en parallèle.

14. Dispositif de coupure de courant continu (1) selon la revendication 1, dans lequel le dispositif de commutation (7) comprend une unité de pont complet ou deux ou plusieurs unités de pont complet connectées en série, et dans l'unité de pont complet, deux quelconques parmi une ou plusieurs branches (703, 704) dans lesquelles une pluralité de dispositifs de commutation à semi-conducteur (72, 74, 75) sont connectés en série et une ou plusieurs branches (701, 702) dans lesquelles un ou plusieurs dispositifs de commutation à semi-conducteur (72) et un ou plusieurs dispositifs de redressement (73) sont connectés en série, et au moins un condensateur (71) sont connectés en parallèle.

15. Dispositif de coupure de courant continu (1) selon la revendication 1, dans lequel le dispositif de commutation (7) comprend une unité de demi-pont ou deux ou plusieurs unités de demi-pont connectées en série, et dans l'unité de demi-pont, une quelconque d'une branche (703 , 704) dans laquelle une pluralité de dispositifs de commutation à semi-conducteurs (72, 74, 75) sont connectés en série et une branche (701, 702) dans laquelle au moins un dispositif de commutation à semi-conducteur (72) et au moins un dispositif de redressement (73) sont connectés en série, et au moins un condensateur (71) est connecté en parallèle

16. Dispositif de coupure de courant continu (1) selon la revendication 1,
dans lequel le disjoncteur à semi-conducteur (4) comprend deux ou plusieurs dispositifs de commutation à semi-conducteur (41), et
les deux ou plusieurs dispositifs de commutation à semi-conducteur (41) sont connectés en série ou en parallèle, avec des directions de polarités des deux ou plusieurs dispositifs de commutation à semi-conducteur (41) étant alignées uniformément.

17. Dispositif de coupure de courant continu (1) selon la revendication 1, comprenant en outre :
une unité de commande (9) configurée pour commander les états respectifs du premier interrupteur mécanique (2-1), du deuxième interrupteur mécanique (2-2), de la première unité et de la deuxième unité de telle sorte que les états soient amenés dans un état OFF dans lequel un courant est bloqué et un état ON dans lequel un courant circule,
dans lequel l'unité de commande (9) est configurée pour commander
le premier interrupteur mécanique (2-1) et le deuxième interrupteur mécanique (2-2) de sorte que le premier interrupteur mécanique (2-1) ou le deuxième interrupteur mécanique (2-2) soient amenés dans l'état ON et la première unité et la deuxième unité de telle sorte que la première unité et la deuxième unité soient amenées dans l'état OFF dans un fonctionnement stable jusqu'à ce qu'un défaut du système se produise dans la première ligne de transmission d'alimentation en CC (11) ou le deuxième ligne transmission d'alimentation en CC (12),
amène la première unité, et la deuxième unité correspondant à la ligne de transmission d'alimentation en CC dans laquelle le défaut du système s'est produit parmi la première ligne de transmission d'alimentation en CC (11) et la deuxième ligne de transmission d'alimentation en CC (12) à passer à l'état ON lorsque le défaut du système s'est produit, de sorte qu'un état de courant sensiblement nul soit établi pour un courant circulant à travers un interrupteur mécanique appartenant à la ligne de transmission d'alimentation en CC, dans laquelle le défaut du système s'est produit, l'interrupteur mécanique étant un parmi le premier interrupteur mécanique (2-1) et le deuxième interrupteur mécanique (2-2)
amène l'interrupteur mécanique dans l'état de courant sensiblement nul pour passer à l'état OFF, et
amène la première unité, et la deuxième unité correspondant à la ligne de transmission d'alimentation en CC, dans laquelle le défaut du système s'est produit à passer à l'état OFF.

18. Dispositif de coupure de courant continu (1) selon la revendication 6, comprenant en outre :
une unité de commande (9) configurée pour commander les états respectifs du premier interrupteur mécanique (2-1), du deuxième interrupteur mécanique (2-2), du disjoncteur à semi-conducteur (4) et du dispositif de commutation (7) de sorte que le les états soient amenés à l'état OFF dans lequel un courant est bloqué et un état ON dans lequel un courant circule,
dans lequel l'unité de commande (9) est configurée
pour actionner le premier interrupteur mécanique (2-1), le deuxième interrupteur mécanique (2-2) et le dispositif de commutation (7) dans l'état ON et le disjoncteur à semi-conducteur (4) dans un état OFF en fonctionnement stable jusqu'à ce qu'un défaut du système se produise dans la première ligne de transmission d'alimentation en CC (11) ou la deuxième ligne de transmission d'alimentation en CC (12),
amène le disjoncteur à semi-conducteur (4) à passer à l'état ON et le dispositif de commutation (7) à passer à l'état OFF lorsque le défaut du système s'est produit, de sorte qu'un courant soit commuté vers le disjoncteur à semi-conducteur (4),
amène un quelconque parmi le premier interrupteur mécanique (2-1) et le deuxième interrupteur mécanique (2-2) dans un état de courant sensiblement nul pour passer à l'état OFF, et
amène le disjoncteur à semi-conducteur (4) à passer à l'état OFF.

19. Dispositif de coupure de courant continu (1) prévu dans un circuit de transmission d'alimentation en CC, dans lequel au moins une première ligne de transmission d'alimentation en CC (11) et une deuxième ligne de transmission d'alimentation en CC (12) sont connectées électriquement les unes aux autres en un premier point de connexion (j), le dispositif de coupure de courant continu (1) comprenant :
un premier interrupteur mécanique (2B-1) prévu dans la première ligne de transmission d'alimentation en CC (11) ;
un deuxième interrupteur mécanique (2B-2) prévu dans la deuxième ligne de transmission d'alimentation en CC (12);
une première ligne auxiliaire (21) connectée électriquement à une première position (j3-1) située du côté opposé au premier point de connexion (j) par rapport au premier interrupteur mécanique (2B-1) dans la première ligne de transmission d'alimentation en CC (11);
une deuxième ligne auxiliaire (22) connectée électriquement à une deuxième position (j3-2) située du côté opposé au premier point de connexion (j) par rapport au deuxième interrupteur mécanique (2B-2) dans la deuxième ligne de transmission d'énergie à courant continu (12) ;
une ligne auxiliaire commune (20) connectée électriquement entre un deuxième point de connexion (j2) auquel la première ligne auxiliaire (21) et la deuxième ligne auxiliaire (22) sont connectées électriquement, et le premier point de connexion (j) ;
un résonateur (8) prévu dans la ligne auxiliaire commune (20) et délivrant un courant oscillé ;
**caractérisé par**
un dispositif de commutation (7E-1, 7E-2) prévu dans chacune des premières lignes auxiliaires (21) et la deuxième ligne auxiliaire (22), et étant configuré pour commuter la première ligne de transmission d'alimentation en CC (11) ou la deuxième ligne de transmission d'alimentation en CC lorsqu'une condition prédéterminée a été satisfaite ; et
une unité de commande (9) configurée pour, lorsque l'unité de commande (9) détecte un défaut du système dans la première ligne de transmission d'alimentation en CC (11), commander le dispositif de commutation (7E-1) correspondant à la première ligne de transmission d'alimentation en CC (11), dans lequel le défaut du système s'est produit, pour passer à un état opérationnel, et configuré pour, lorsque l'unité de commande (9) détecte un défaut du système dans la deuxième ligne de transmission d'alimentation en CC (12), amener le dispositif de commutation (7E-2) correspondant à la deuxième ligne de transmission d'alimentation en CC (12), dans laquelle le défaut du système s'est produit, à passer à un état opérationnel.

20. Dispositif de coupure de courant continu (1) selon la revendication 19,
dans lequel l'unité de commande (9) est configurée pour commander les états respectifs du premier interrupteur mécanique (2B-1), du deuxième interrupteur mécanique (2B-2) et du dispositif de commutation (7E-1, 7E-2) de sorte que les états soient amenés dans un état OFF dans lequel un courant est bloqué et un état ON dans lequel un courant circule,
dans lequel l'unité de commande (9) est configurée pour actionner le premier interrupteur mécanique (2B-1) et le deuxième interrupteur mécanique (2B-2) dans un état ON et le dispositif de commutation (7E-1, 7E-2) dans un état OFF en fonctionnement stable jusqu'à ce que le défaut du système se produise dans la première ligne de transmission d'alimentation en CC (11) ou la deuxième ligne de transmission d'alimentation en CC (12),
dans lequel l'unité de commande (9) est configurée pour amener le dispositif de commutation (7E1, 7E-2) correspondant à la ligne de transport d'énergie CC (11, 12), dans laquelle le défaut du système s'est produit, à passer à un état opérationnel, de sorte qu'un état de courant sensiblement nul d'un courant circulant à travers l'interrupteur mécanique (2B-1, 2B-2) appartenant à la ligne de transmission d'alimentation en CC (11, 12), la ligne de transmission d'alimentation en CC (11, 12) étant présente dans un circuit de courant fermé comprenant le résonateur (8) et le dispositif de commutation (7E-1, 7E-2) et le défaut du système s'étant produit dans la ligne de transmission d'alimentation en CC (11, 12), et l'interrupteur mécanique étant au moins un du premier interrupteur mécanique (2B-1) et du deuxième interrupteur mécanique (2B-2), est créé lorsque le défaut du système s'est produit, et
dans lequel l'unité de commande (9) est configurée pour amener l'interrupteur mécanique (2B-1, 2B-2) dans l'état de courant sensiblement nul à passer à l'état OFF.
